(19) Europäisches Patentamt
European Patent Office
Office européen des brevets

(11) EP 2 177 563 A1

(12) # EUROPÄISCHE PATENTANMELDUNG

(43) Veröffentlichungstag:
**21.04.2010 Patentblatt 2010/16**

(51) Int Cl.:
***C08L 33/02*** *(2006.01)* ***C08L 35/00*** *(2006.01)*
***C08L 23/10*** *(2006.01)* ***C08L 23/18*** *(2006.01)*

(21) Anmeldenummer: **09171788.4**

(22) Anmeldetag: **30.09.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **15.10.2008 EP 08166695**

(71) Anmelder: **BASF SE**
**67056 Ludwigshafen (DE)**

(72) Erfinder:
- **Elizalde, Oihana**
  **68159 Mannheim (DE)**
- **Michl, Kathrin**
  **67063 Ludwigshafen (DE)**

(54) **Wässriges Bindemittel für körnige und/oder faserförmige Substrate**

(57) Wässrige Bindemittel für körnige und faserförmige Substrate auf Basis hydrophob modifizierter Polymerisate.

EP 2 177 563 A1

## Beschreibung

Der Gegenstand der vorliegenden Erfindung betrifft ein wässriges Bindemittel für körnige und/oder faserförmige Substrate, enthaltend als wirksame Bestandteile
a) ein durch radikalische Polymerisation erhältliches Polymerisat, welches

| | |
|---|---|
| 0,1 bis 40 Gew.-% | wenigstens eines $C_3$- bis $C_{30}$-Alkens (Monomer A1), |
| 40 bis 99,9 Gew.-% | wenigstens einer ethylenisch ungesättigten $C_3$- bis $C_6$-Monocarbonsäure (Monomer A2), |
| 0 bis 50 Gew.-% | wenigstens einer ethylenisch ungesättigten $C_4$- bis $C_{12}$-Dicarbonsäure und/oder der daraus zugänglichen ethylenisch ungesättigten Dicarbonsäuremonoalkylester oder Dicarbonsäureanhydride (Monomer A3), und |
| 0 bis 30 Gew.-% | wenigstens einer anderen ethylenisch ungesättigten Verbindung, welche mit den Monomeren A1 bis A3 copolymerisierbar ist (Monomer A4), |

in einpolymerisierter Form enthält, wobei sich die Monomerenmengen A1 bis A4 zu 100 Gew.-% addieren [Polymerisat A],
b) ein durch radikalische Polymerisation erhältliches Polymerisat, welches 0,1 bis 15 Gew.-% wenigstens einer, wenigstens eine Carboxyl-, Hydroxyalkyl-, Epoxyl-, Methylol-, Silyl- und/oder Oxazolinylgruppe aufweisende, ethylenisch ungesättigten Verbindung [Monomer B1] und 85 Gew.-% bis 99,9 Gew.-% wenigstens einer anderen, mit dem Monomer B1 copolymerisierbaren ethylenisch ungesättigten Verbindung [Monomer B2] in einpolymerisierter Form enthält, wobei sich die Monomerenmengen B1 und B2 zu 100 Gew.-% addieren [Polymerisat B], und
c) eine Polyolverbindung mit wenigstens zwei Hydroxylgruppen [Polyol C].

Ferner betrifft die vorliegende Erfindung ein Verfahren zur Herstellung von Formkörpern unter Verwendung des erfindungsgemäßen Bindemittels sowie die so hergestellten Formkörper selbst.

Die Verfestigung von körnigen oder faserförmigen Substraten, insbesondere in flächenförmigen Gebilden, wie beispielsweise Faservliesen, Faserplatten oder Spanplatten etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der unerwünschten Formaldehydemission. Zur Vermeidung von Formaldehydemissionen wurden bereits zahlreiche Alternativen zu den bisher bekannten Bindemitteln vorgeschlagen. So sind aus der US-A 4,076,917 Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A-445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein hochreaktives Polyol eingesetzt wird. Als hochreaktive Polyole werden β-Hydroxyalkylamide genannt.

Die EP-A-651088 beschreibt entsprechende Bindemittel für Substrate aus Cellulosefaser. Diese Bindemittel enthalten zwingend einen phosphorhaltigen Reaktionsbeschleuniger.

Die EP-A-672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A-2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon.

Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

Verfahren zur Herstellung von Polymerisaten auf Basis von Alkenen und anderen copolymerisierbaren ethylenisch ungesättigten Verbindungen sind dem Fachmann hinreichend bekannt. Dabei erfolgt die Copolymerisation im wesentlichen in Form einer Lösungspolymerisation (siehe beispielsweise A. Sen et al., Journal American Chemical Society, 2001, 123, Seiten 12738 bis 12739; B. Klumperman et al., Macromolecules, 2004, 37, Seiten 4406 bis 4416; A. Sen et al., Journal of Polymer Science, Part A: Polymer Chemistry, 2004, 42(24), Seiten 6175 bis 6192; WO 03/042254, WO 03/091297 oder EP-A 1384729) oder in Form einer wässrigen Emulsionspolymerisation, wobei diese insbesondere auf Basis des niedrigsten Alkens Ethen erfolgt (siehe beispielsweise US-A 4,921,898, US-A 5,070,134, US-A 5,110,856, US-A 5,629,370, EP-A 295727, EP-A 757065, EP-A 1114833 oder DE-A 19620817).

Zur radikalisch initiierten wässrigen Emulsionspolymerisation unter Verwendung höherer Alkene ist von nachfolgendem Stand der Technik auszugehen.

In der DE-OS 1720277 wird ein Verfahren zur Herstellung von filmbildenden wässrigen Polymerisatdispersionen unter Verwendung von Vinylestern und 1-Octen offenbart. Dabei kann das Gewichtsverhältnis von Vinylester zu 1-Octen von 99:1 bis 70:30 betragen. Optional können die Vinylester im untergeordneten Maße im Gemisch mit anderen copolymerisierbaren ethylenisch ungesättigten Verbindungen zur Emulsionspolymerisation eingesetzt werden.

S.M. Samoilov beschreibt in J. Macromol. Sci. Chem., 1983, A19(1), Seiten 107 bis 122, die radikalisch initiierte wässrige Emulsionspolymerisation von Propen mit unterschiedlichen ethylenisch ungesättigen Verbindungen. Dabei wurde als Ergebnis festgehalten, dass die Copolymerisation von Propen mit ethylenisch ungesättigten Verbindungen, welche stark elektronenziehende Gruppen aufweisen, wie beispielsweise Chlortrifluorethylen, Trifluoracrylonitril, Maleinsäureanhydrid oder Methyltrifluoracrylat, Polymerisate mit einem deutlich höheren Propenanteil bzw. Copolymerisate mit höheren Molekulargewichten lieferten, als bei Verwendung der bei der radikalisch initiierten wässrigen Emulsionspolymerisation üblichen ethylenisch ungesättigten Verbindungen Vinylacetat, Vinylchlorid, Acrylsäuremethyl- bzw. -butylester. Dieses Verhalten wird insbesondere mit den bei den höheren Alkenen üblichen Wasserstoffradikalübetragungsreaktionen begründet.

Die Herstellung wässriger Polymerisatdispersionen auf Basis unterschiedlicher, extrem wasserunlöslicher Monomerer durch radikalisch initiierte Emulsionspolymerisation unter Verwendung von Wirtsverbindungen wird in US-A 5,521,266 und EP-A 780401 offenbart.

In der DE-A 102005035692 wird die Herstellung von wässrigen Polymerisatdispersionen auf der Basis 5 bis 12 C-Atome aufweisenden Alkenen offenbart. Dabei werden die 5 bis 12 C-Atome aufweisenden Alkene dem Polymerisationsgemisch unter Polymerisationsbedingungen zudosiert.

Gemäß EP-A 891430 werden wässrige Polymersysteme zur Lederhydrophobierung offenbart, welche durch radikalische Polymerisation von 20 bis 90 Gew.-% monoethylenisch ungesättigten $C_4$- bis $C_6$-Dicarbonsäuren bzw. deren Anhydriden mit 5 bis 50 Gew.-% eines $C_2$- bis $C_6$-Olefins und 5 bis 50 Gew.-% eines hydrophoben ethylenisch ungesättigten Monomeren erhalten werden.

Die EP-A 670909 offenbart wässrige Polymerdispersionen, welche als Komponente zur Fettung bzw. Weichmachung von Leder eingesetzt werden und welche durch radikalische Polymerisation von Maleinsäureanhydrid, $C_{12}$- bis $C_{30}$-α-Olefinen und Estern von Acrylsäure, Methacrylsäure und/oder Maleinsäure mit $C_{12}$- bis $C_{30}$-Alkoholen erhalten werden.

Beschichtungszusammensetzungen auf Basis eine Vernetzers, wie beispielsweise ein endgruppenverschlossenes Polyisocyanat oder ein Aminoplast und eines Emulsionspolymerisats auf Basis von α-Olefinen und ethylenisch ungesättigten Carbonsäueranhydriden, werden in der EP-A 450452 offenbart.

Gemäß E. Witek, A. Kochanowski, E. Bortel, Polish Journal of Applied Chemistry XLVI, No. 3-4, Seiten 177-185 (2002) wird die Verwendung von Copolymeren auf Basis von langkettigen α-Olefinen und hydrophilen Monomeren, wie beispielsweise Acrylsäure und/oder Maleinsäureanhydrid zur Entfernen von Rohölverunreinigungen in Wasser beschrieben.

In einer vom Anmelder beim Europäischen Patentamt eingereichten prioritätsbegründenden Patentanmeldung mit dem Aktenzeichen 07118135.8, wird die Herstellung von Säurenpolymeren und die Verwendung der Säurepolymeren und Polyolen als Komponenten in Bindemitteln für körnige und/oder faserförmige Substrate offenbart.

Aufgabe der vorliegenden Erfindung war es, ein formaldehydfreies Bindemittelsystem für körnige und/oder faserförmige Substrate zur Verfügung zu stellen, welches im Vergleich zu den Bindemitteln des Standes der Technik eine geringere Vergilbungsneigung und eine verbesserte Nassreißfestigkeit aufweist.

Demgemäß wurde das eingangs definierte wässrige Bindemittel gefunden.

Erfindungsgemäß wird ein wässriges Bindemittel eingesetzt, das ein Polymerisat A enthält, welches durch radikalische Polymerisation erhältlich ist und

| | |
|---|---|
| 0,1 bis 40 Gew.-% | wenigstens eines Monomeren A1, |
| 40 bis 99,9 Gew.-% | wenigstens eines Monomeren A2, |
| 0 bis 50 Gew.-% | wenigstens eines Monomeren A3, und |
| 0 bis 30 Gew.-% | wenigstens eines Monomeren A4, |

in einpolymerisierter Form enthält.

Mit besonderem Vorteil werden wässrige Bindemittel eingesetzt, die ein Polymerisat A enthalten, welches durch radikalische Polymerisation erhältlich ist und

| | |
|---|---|
| 1 bis 25 Gew.-% | wenigstens eines Monomeren A1, |
| 50 bis 89 Gew.-% | wenigstens eines Monomeren A2, und |
| 10 bis 40 Gew.-% | wenigstens eines Monomeren A3 |

und insbesondere vorteilhaft

| | |
|---|---|
| 4 bis 16 Gew.-% | wenigstens eines Monomeren A1, |
| 55 bis 70 Gew.-% | wenigstens eines Monomeren A2, und |
| 20 bis 35 Gew.-% | wenigstens eines Monomeren A3 |

in einpolymerisierter Form enthält.

Als Monomere A1 kommen $C_3$- bis $C_{30}$-Alkene, bevorzugt $C_6$- bis $C_{18}$-Alkene und insbesondere $C_8$- bis $C_{12}$-Alkene in Betracht, welche sich radikalisch copolymerisieren lassen und welche neben Kohlenstoff und Wasserstoff keine weiteren Elemente auweisen. Hierzu zählen beispielsweise die linearen Alkene Propen, n-Buten-1, n-Buten-2, 2-Methylpropen, 2-Methylbuten-1, 3-Methylbuten-1, 3,3-Dimethyl-2-isopropylbuten-1, 2-Methylbuten-2, 3-Methylbuten-2, Penten-1, 2-Methylpenten-1, 3-Methylpenten-1, 4-Methylpenten-1, Penten-2, 2-Methylpenten-2, 3-Methylpenten-2, 4-Methylpenten-2, 2-Ethylpenten-1, 3-Ethylpenten-1, 4-Ethylpenten-1, 2-Ethylpenten-2, 3-Ethylpenten-2, 4-Ethylpenten-2, 2,4,4-Trimethylpenten-1, 2,4,4-Trimethylpenten-2, 3-Ethyl-2-methylpenten-1, 3,4,4-Trimethylpenten-2, 2-Methyl-3-ethylpenten-2, Hexen-1, 2-Methylhexen-1, 3-Methylhexen-1, 4-Methylhexen-1, 5-Methylhexen-1, Hexen-2, 2-Methylhexen-2, 3-Methylhexen-2, 4-Methylhexen-2, 5-Methylhexen-2, Hexen-3, 2-Methylhexen-3, 3-Methylhexen-3, 4-Methylhexen-3, 5-Methylhexen-3, 2,2-Dimethylhexen-3, 2,3-Dimethylhexen-2, 2,5-Dimethylhexen-3, 2,5-Dimethylhexen-2, 3,4-Dimethylhexen-1, 3,4-Dimethylhexen-3, 5,5-Dimethylhexen-2, 2,4-Dimethylhexen-1, Hepten-1, 2-Methylhepten-1, 3-Methylhepten-1, 4-Methylhepten-1, 5-Methylhepten-1, 6-Methylhepten-1, Hepten-2, 2-Methylhepten-2, 3-Methylhepten-2, 4-Methylhepten-2, 5-Methylhepten-2, 6-Methylhepten-2, Hepten-3, 2-Methylhepten-3, 3-Methylhepten-3, 4-Methylhepten-3, 5-Methylhepten-3, 6-Methylhepten-3, 6,6-Dimethylhepten-1, 3,3-Dimethylhepten-1, 3,6-Dimethylhepten-1, 2,6-Dimethylhepten-2, 2,3-Dimethylhepten-2, 3,5-Dimethylhepten-2, 4,5-Dimethylhepten-2, 4,6-Dimethylhepten-2, 4-Ethylhepten-3, 2,6-Dimethylhepten-3, 4,6-Dimethylhepten-3, 2,5-Dimethylhepten-4, Octen-1, 2-Methylocten-1, 3-Methylocten-1, 4-Methylocten-1, 5-Methylocten-1, 6-Methylocten-1, 7-Methylocten-1, Octen-2, 2-Methylocten-2, 3-Methylocten-2, 4-Methylocten-2, 5-Methylocten-2, 6-Methylocten-2, 7-Methylocten-2, Octen-3, 2-Methylocten-3, 3-Methylocten-3, 4-Methylocten-3, 5-Methylocten-3, 6-Methylocten-3, 7-Methylocten-3,Octen-4, 2-Methylocten-4, 3-Methylocten-4, 4-Methylocten-4, 5-Methylocten-4, 6-Methylocten-4, 7-Methylocten-4, 7,7-Dimethylocten-1, 3,3-Dimethylocten-1, 4,7-Dimethylocten-1, 2,7-Dimethylocten-2, 2,3-Dimethylocten-2, 3,6-Dimethylocten-2, 4,5-Dimethylocten-2, 4,6-Dimethylocten-2, 4,7-Dimethylocten-2, 4-Ethylocten-3, 2,7-Dimethylocten-3, 4,7-Dimethylocten-3, 2,5-Dimethylocten-4, Nonen-1, 2-Methylnonen-1, 3-Methylnonen-1, 4-Methylnonen-1, 5-Methylnonen-1, 6-Methylnonen-1, 7-Methylnonen-1, 8-Methylnonen-1, Nonen-2, 2-Methylnonen-2, 3-Methylnonen-2, 4-Methylnonen-2, 5-Methylnonen-2, 6-Methylnonen-2, 7-Methylnonen-2, 8-Methylnonen-2, Nonen-3, 2-Methylnonen-3, 3-Methylnonen-3, 4-Methylnonen-3, 5-Methylnonen-3, 6-Methylnonen-3, 7-Methylnonen-3, 8-Methylnonen-3, Nonen-4, 2-Methylnonen-4, 3-Methylnonen-4, 4-Methylnonen-4, 5-Methylnonen-4, 6-Methylnonen-4, 7-Methylnonen-4, 8-Methylnonen-4, 4,8-Dimethylnonen-1, 4,8-Dimethylnonen-4, 2,8-Dimethylnonen-4, Decen-1, 2-Methyldecen-1, 3-Methyldecen-1, 4-Methyldecen-1, 5-Methyldecen-1, 6-Methyldecen-1, 7-Methyldecen-1, 8-Methyldecen-1, 9-Methyldecen-1 Decen-2, 2-Methyldecen-2, 3-Methyldecen-2, 4-Methyldecen-2, 5-Methyldecen-2, 6-Methyldecen-2, 7-Methyldecen-2, 8-Methyldecen-2, 9-Methyldecen-2, Decen-3, 2-Methyldecen-3, 3-Methyldecen-3, 4-Methyldecen-3, 5-Methyldecen-3, 6-Methyldecen-3, 7-Methyldecen-3, 8-Methyldecen-3, 9-Methyldecen-3, Decen-4, 2-Methyldecen-4, 3-Methyldecen-4, 4-Methyldecen-4, 5-Methyldecen-4, 6-Methyldecen-4, 7-Methyldecen-4, 8-Methyldecen-4, 9-Methyldecen-4, Decen-5, 2-Methyldecen-5, 3-Methyldecen-5, 4-Methyldecen-5, 5-Methyldecen-5, 6-Methyldecen-5, 7-Methyldecen-5, 8-Methyldecen-5, 9-Methyldecen-5, 2,4-Dimethyldecen-1, 2,4-Dimethyldecen-2, 4,8-Dimethyldecen-1, Undecen-1, 2-Methylundecen-1, 3-Methylundecen-1, 4-Methylundecen-1, 5-Methylundecen-1, 6-Methylundecen-1, 7-Methylundecen-1, 8-Methylundecen-1, 9-Methylundecen-1, 10-Methylundecen-1, Undecen-2, 2-Methylundecen-2, 3-Methylundecen-2, 4-Methylundecen-2, 5-Methylundecen-2, 6-Methylundecen-2, 7-Methylundecen-2, 8-Methylundecen-2, 9-Methylundecen-2, 10-Methylundecen-2, Undecen-3, 2-Methylundecen-3, 3-Methylundecen-3, 4-Methylundecen-3, 5-Methylundecen-3, 6-Methylundecen-3, 7-Methylundecen-3, 8-Methylundecen-3, 9-Methylundecen-3, 10-Methylundecen-3, Undecen-4, 2-Methylundecen-4, 3-Methylundecen-4, 4-Methylundecen-4, 5-Methylundecen-4, 6-Methylundecen-4, 7-Methylundecen-4, 8-Methylundecen-4, 9-Methylundecen-4, 10-Methylundecen-4, Undecen-5, 2-Methylundecen-5, 3-Methylundecen-5, 4-Methylundecen-5, 5-Methylundecen-5, 6-Methylundecen-5, 7-Methylundecen-5, 8-Methylundecen-5, 9-Methylundecen-5, 10-Methylundecen-5, Dodecen-1, Dodecen-2, Dodecen-3, Dodecen-4, Dodecen-5, Dodecen-6, 4,8-Dimethyldecen-1, 4-Ethyldecen-1, 6-Ethyldecen-1, 8-Ethyldecen-1, 2,5,8-Trimethylnonen-1, Tridecen-1, Tridecen-2, Tridecen-3, Tridecen-4, Tridecen-5, Tridecen-6, 2-Methyldodecen-1, 11-Methyldodecen-1, 2,5-Dimethylundecen-2, 6,10-Dimethylundecen-1, Tetradecen-1, Tetradecen-2, Tetradecen-3, Tetradecen-4, Tetradecen-5, Tetradecen-6, Tetradecen-7, 2-Methyltridecen-1, 2-Ethyldodecen-1, 2,6,10-Trimethylundecen-1, 2,6-Dimethyldodecen-2, 11-Methyltridecen-1, 9-Methyltridecen-1, 7-Methyltridecen-1, 8-Ethyldodecen-1, 6-Ethyldodecen-1, 4-Ethyldodecen-1, 6-Butyldecen-1, Pentadecen-1, Pentadecen-2, Pentadecen-3, Pentadecen-4, Pentadecen-5, Pentadecen-6, Pentadecen-7, 2-Methyltetradecen-1, 3,7,11-Trimethyldodecen-1, 2,6,10-Trimethyldodecen-1, Hexadecen-1, Hexadecen-2, Hexadecen-3, Hexadecen-4, Hexadecen-5, Hexadecen-6, Hexadecen-7, Hexadecen-8, 2-Methylpentadecen-1, 3,7,11-Trimethyltridecen-1, 4,8,12-Trimethyltridecen-1, 11-Methylpentadecen-1, 13-Methylpentadecen-1, 7-Methylpentadecen-1, 9-Methylpentadecen-1, 12-Ethyltetradecen-1, 8-Ethyltetradecen-1, 4-Ethyltetradecen-1, 8-Butyldodecen-1, 6-Butyldodecen-1 Heptadecen-1, Heptadecen-2, Heptadecen-3, Heptadecen-4, Heptadecen-5, Heptadecen-6, Heptadecen-7, Heptadecen-8, 2-Methylhexadecen-1, 4,8,12-Trimethyltetradecen-1, Octadecen-1, Octadecen-2, Octadecen-3, Octadecen-4, Octadecen-5, Octadecen-6, Octadecen-7, Octadecen-8, Octadecen-9, 2-Methylheptadecen-1, 13-Methylheptadecen-1, 10-Butyltetradecen-1, 6-Butyltetradecen-1, 8-Butyltetradecen-1, 10-Ethlyhexadecen-1, Nonadecen-1, Nonadecen-2, 1-Methyloctadecen-1, 7,11,15-Trimethylhexadecen-1, Eicosen-1, Eicosen-2, 2,6,10,14-Tetramethylhexadecen-2, 3,7,11,15-Tetramethylhexadecen-2, 2,7,11,15-Tetramethylhedexacen-1, Docosen-1, Docosen-2, Docosen-7, 4,9,13,17-Tetramethyloctadecen-1, Tetracosen-1, Tetracosen-2, Tetracosen-9, Hexacosen-1, Hexacosene-2, Hexacosen-9, Triaconten-1, Dotriaconten-1 oder Tritriaconten-1 sowie die cyclischen Alkene Cyclopenten, 2-Methylcyclopenten-1, 3-Methylcyclopenten-1, 4-Methylcyclopenten-1, 3-Butylcyclopenten-1, Vinylcyclopentan, Cyclohexen, 2-Methylcyclohexen-1, 3-Methylcyclohexen-1, 4-Methylcyclohexen-1, 1,4-Dimethylcyclohexen-1, 3,3,5-Trimethylcyclohexen-1, 4-Cyclopentylcyclohexen-1, Vinylcyclohexan, Cyclohepten, 1,2-Dimethylcyclohepten-1, Cycloocten, 2-Methylcycloocten-1, 3-Methylcycloocten-1, 4-Methylcycloocten-1, 5-Methylcycloocten-1, Cyclononen, Cyclodecen, Cycloundecen, Cyclododecen, Bicyclo[2.2.1]hepten-2, 5-Ethylbicyclo[2.2.1]hepten-2, 2-Methylbicyclo[2.2.2]octen-2, Bicyclo[3.3.1]nonen-2 oder Bicyclo[3.2.2]nonen-6. Selbstverständlich können auch Gemische vorgenannter Monomere A zur Herstellung der Polymerisate A werden.

Bevorzugt sind die 1-Alkene, wie beispielsweise Propen, 2-Methylpropen, Buten-1, Penten-1, Hexen-1, Hepten-1, Octen-1, Nonen-1, Decen-1, Undecen-1, Dodecen-1, 2,4,4-Trimethylpenten-1, 2,4-Dimethylhexen-1, 6,6-Dimethylhepten-1, 2-Methylocten-1, Tridecen-1, Tetradecen-1, Hexadecen-1, Heptadecen-1, Octadecen-1, Nonadecen-1, Eicosen-1, Docosen-1, Tetracosen-1, 2,6-Dimethyldodecen-1, 6-Butyldecen-1, 4,8,12-Trimethyldecen-1 oder 2-Methylheptadecen-1. Vorteilhaft eingesetzt wird als wenigstens ein Monomer A1 ein 6 bis 18 Kohlensotffatome aufweisendes Alken, bevorzugt ein 8 bis 12 Kohlenstoffatome aufweisendes 1-Alken. Insbesondere bevorzugt sind Octen-1, Nonen-1, Decen-1, Undecen-1 und/oder Dodecen-1, wobei Octen-1 und/oder Decen-1 besonders bevorzugt sind.

Polymerisat A enthält 0,1 bis 40 Gew.-%, bevorzugt 1 bis 25 Gew.-% und insbesondere bevorzugt 4 bis 16 Gew.-% an Monomeren A1 in einpolymerisierter Form.

Als Monomere A2 kommen 3 bis 6 Kohlenstoffatome aufweisende ethylenisch ungesättigte, insbesondere α,β-monoethylenisch ungesättigte Monocarbonsäuren sowie deren wasserlöslichen Salze, insbesondere deren Alkalimetall- oder Ammoniumsalze, wie beispielsweise Acrylsäure, Methacrylsäure, Ethylacrylsäure, Allylessigsäure, Crotonsäure und/oder Vinylessigsäure sowie die Ammonium-, Natrium- oder Kaliumsalze der vorgenannten Säuren in Betracht. Besonders bevorzugt sind Acrylsäure und/oder Methacrylsäure, wobei Acrylsäure insbesondere bevorzugt ist.

Polymerisat A enthält 40 bis 99,9 Gew.-%, bevorzugt 50 bis 89 Gew.-% und insbesondere bevorzugt 55 bis 70 Gew.-% an Monomeren A2 in einpolymerisierter Form.

Als Monomere A3 kommen 4 bis 12 Kohlenstoffatome aufweisende ethylenisch ungesättigte, insbesondere α,β-monoethylenisch ungesättigte Dicarbonsäuren sowie deren wasserlöslichen Salze, insbesondere deren Alkalimetall- oder Ammoniumsalze, und/oder die aus den 4 bis 12 Kohlenstoffatomen aufweisenden ethylenisch ungesättigten Dicarbonsäuren zugänglichen ethylenisch ungesättigten Dicarbonsäuremonoalkylester, insbesondere deren $C_1$- bis $C_6$-Monoalkylester, beispielsweise deren Monomethyl-, Monoethyl-, Monopropyl-, Monoisopropyl-, Monobutyl-, Monopentyl- oder Monohexylester sowie die entsprechend zugänglichen Dicarbonsäureanhydride in Betracht, wie beispielsweise Maleinsäure, Fumarsäure, Itakonsäure, Methylmaleinsäure, 1,2,3,6-Tetrahydrophthalsäure sowie die Ammonium-, Natrium- oder Kaliumsalze der vorgenannten Säuren, Maleinsäure-, Fumarsäure-, Itakonsäure-, Methylmaleinsäure-, 1,2,3,6-Tetrahydrophthalsäuremonomethylester, -monoethylester, -monopropylester, Maleinsäureanhydrid, Itakonsäureanhydrid, Methylmaleinsäureanhydrid oder 1,2,3,6-Tetrahydrophthalsäureanhydrid. Besonders bevorzugt sind Maleinsäure, Itakonsäure, Methylmaleinsäure, 1,2,3,6-Tetrahydrophthalsäure, Maleinsäureanhydrid, Itakonsäureanhydrid, Methylmaleinsäureanhydrid und/oder 1,2,3,6-Tetrahydrophthalsäureanhydrid, wobei Maleinsäureanhydrid insbesondere bevorzugt ist.

Polymerisat A enthält 0 bis 50 Gew.-%, bevorzugt 10 bis 40 Gew.-% und insbesondere bevorzugt 20 bis 35 Gew.-% an Monomeren A3 in einpolymerisierter Form.

Als Monomere A4 kommen alle diejenigen ethylenisch ungesättigten Verbindungen in Betracht, welche sich von den Monomeren A1 bis A3 unterscheiden, aber in einfacher Weise mit diesen radikalisch copolymerisierbar sind, wie beispielsweise vinylaromatische Monomere, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itakonsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren A4, einen Anteil von $\geq 50$ Gew.-%, bevorzugt $\geq 80$ Gew.-% und insbesondere bevorzugt $\geq 90$ Gew.-% auf sich vereinen oder sogar die Gesamtmenge der Monomeren A4 bilden. In aller Regel weisen diese Monomeren in Wasser bei Normalbedingungen [20 °C, 1 atm (absolut)] lediglich eine mäßige bis geringe Löslichkeit auf.

Monomere A4, die unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall werden die vorgenannten wasserlöslichen Monomeren A4 lediglich als modifizierende Monomere in Mengen von $\leq 10$ Gew.-%, bevorzugt $\leq 5$ Gew.-% und insbesondere bevorzugt $\leq 3$ Gew.-%, jeweils bezogen auf die Gesamtmenge an Monomeren A4, verwendet. Insbesondere bevorzugt werden jedoch keinerlei derartigen wasserlöslichen Monomeren A4 bei Herstellung des Polymerisats A eingesetzt.

Monomere A4, die üblicherweise die innere Festigkeit der Verfilmungen einer Polymermatrix erhöhen, weisen normalerweise wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Häufig werden die vorgenannten vernetzenden Monomeren A4 in Mengen von $\leq 10$ zu Gew.-%, bevorzugt jedoch in Mengen von $\leq 3$ Gew.-%, jeweils bezogen auf die Gesamtmenge an Monomeren A4, verwendet. Insbesondere bevorzugt werden jedoch keinerlei derartigen vernetzenden Monomeren A4 eingesetzt.

Vorteilhaft werden zur Herstellung des Polymerisats A als Monomere A4 solche Monomeren oder Monomerenmischungen eingesetzt, welche zu

- 50 bis 100 Gew.-% Ester der Acryl- und/oder Methacrylsäure mit 1 bis 12 Kohlenstoffatomen aufweisenden Alkanolen, oder

- 50 bis 100 Gew.-% Styrol und/oder Butadien, oder

- 50 bis 100 Gew.-% Vinylchlorid und/oder Vinylidenchlorid, oder

- 50 bis 100 Gew.-% Vinylacetat und/oder Vinylpropionat

enthalten.

Polymerisat A enthält 0 bis 30 Gew.-%, bevorzugt 0 bis 15 Gew.-% und insbesondere bevorzugt keinerlei Monomeren A4 in einpolymerisierter Form.

Die Herstellung des Polymerisats A an sich ist unkritisch und dem Fachmann prinzipiell geläufig. Sie erfolgt im Wesentlichen durch radikalisch initiierte Polymerisation der Monomeren A1 bis A4. Dabei kann die radikalische Polymerisation der Monomeren A1 bis A4 prinzipiell in Substanz (Substanzpolymerisation), in einem organischen Lösungsmittel (Lösungspolymerisation) oder emulgiert in einem wässrigen Medium (wässrige Emulsions- oder Suspensionspolymerisation) erfolgen. Bevorzugt erfolgt die Herstellung des Polymerisats A durch radikalisch initiierte Lösungspolymerisation beispielsweise in Wasser oder in einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Bei der Herstellung der Polymerisate A ist es möglich, gegebenenfalls jeweils eine Teil- oder die Gesamtmenge der Monomere A1 bis A4 im Polymerisationsgefäß vorzulegen. Es ist aber auch möglich, jeweils die Gesamtmenge oder die jeweils gegebenenfalls verbliebene Restmenge der Monomere A1 bis A4 während der Polymerisationsreaktion zuzudosieren. Die Gesamtmengen oder die gegebenenfalls verbliebenen Restmengen an Monomeren A1 bis A4 können dem Polymerisationsgefäß dabei diskontinuierlich in einer oder mehreren Portionen oder kontinuierlich mit gleichbleibenden oder sich verändernden Mengenströmen zudosiert werden. Häufig wird wenigstens eine Teilmenge der Monomeren A1 und/oder A3 und vorteilhaft ausschließlich Monomer A3 im Polymerisationsmedium vor Initiierung der Polymerisationsreaktion vorgelegt.

Bevorzugt erfolgt die radikalisch initiierte Lösungspolymerisation der Monomeren A1 bis A4 in einem protischen oder einem aprotischen organischen Lösungsmittel, wobei aprotische Lösungsmittel insbesondere bevorzugt sind. Als aprotische organische Lösungsmittel kommen alle organischen Lösemittel in Frage, welche unter Polymerisationsbedingungen kein ionisierbares Proton im Molekül enthalten bzw. einen pKs-Wert aufweisen, welcher größer als der von Wasser ist. Beispiele für derartige Lösungsmittel sind aromatische Kohlenwasserstoffe, wie Toluol, o-, m-, p-Xylol und Isomerengemische sowie Ethylbenzol, lineare oder cyclische aliphatische Kohlenwasserstoffe, wie Pentan, Hexan, Heptan, Octan, Nonan, Dodecan, Cyclohexan, Cyclooctan, Methylcyclohexan, sowie Mischungen der genannten Kohlenwasserstoffe und Benzinfraktionen, welche keine polymerisierbaren Monomeren enthalten, aliphatische oder aromatische Halogenkohlenwasserstoffe, wie Chloroform, Tetrachlorkohlenstoff, Hexachlorethan, Dichlorethan, Tetrachlorethan, Chlorbenzol sowie flüssige $C_1$- bzw. $C_2$-Fluorchlorkohlenwasserstoffe, aliphatische $C_2$- bis $C_5$-Nitrile, wie Acetonitril, Propionitril, Butyronitril oder Valeronitril, lineare oder cyclische aliphatische $C_3$- bis $C_7$-Ketone, wie Aceton, Methylethylketon, Methylisobutylketon, 2- bzw. 3-Hexanon, 2-, 3- bzw. 4-Heptanon, Cyclopentanon, Cyclohexanon, lineare oder cyclische aliphatische Ether, wie Diisopropylether, 1,3- oder 1,4-Dioxan, Tetrahydrofuran oder Ethylenglykoldimethylether, Carbonate, wie Diethylcarbonat sowie Ester aus aliphatischen $C_1$- bis $C_5$-Carbonsäuren oder aromatischen Carbonsäuren mit aliphatischen $C_1$- bis $C_5$-Alkoholen, wie Ameisensäureethylester, Ameisensäure-n-propylester, Ameisensäureisopropylester, Ameisensäure-n-butylester, Ameisensäureisobutylester, Ameisensäure-tert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester Propionsäuremethylester, Propionsäureethylester, Propionsäure-n-propylester, Propionsäureisopropylester, Propionsäure-n-butylester, Propionsäureisobutylester, Propionsäure-tert.-butylester, Propionsäureamylester, Buttersäuremethylester, Buttersäureethylester, Buttersäure-n-propylester, Buttersäureisopropylester, Buttersäure-n-butylester, Buttersäureisobutylester, Buttersäure-tert.-butylester, Buttersäureamylester, Valeriansäuremethylester, Valeriansäureethylester, Valeriansäure-n-propylester, Valeriansäureisopropylester, Valeriansäure-n-butylester, Valeriansäureisobutylester, Valeriansäure-tert.-butylester, Valeriansäureamylester, Benzoesäuremethylester oder Benzoesäureethylester sowie Lactone, wie Butyrolacton, Valerolacton oder Caprolacton.

Vorzugsweise werden jedoch solche aprotischen organischen Lösungsmittel ausgewählt, in welchen sich die jeweils eingesetzten Radikalinitiatoren gut lösen. Insbesondere werden solche aprotischen organischen Lösemittel eingesetzt, in denen sich neben den Radikalinitiatoren auch die Polymerisate A gut lösen. Insbesondere bevorzugt werden solche aprotischen organischen Lösungsmittel ausgewählt, welche sich zusätzlich in einfacher Weise, beispielsweise durch Destillation, Inertgasstrippung und/oder Wasserdampfdestillation aus der erhaltenen Polymerisat A-Lösung abtrennen lassen. Bevorzugte Beispiele hierfür sind Ester aus aliphatischen $C_1$- bis $C_5$-Carbonsäuren oder aromatischen Carbonsäuren mit aliphatischen $C_1$- bis $C_5$-Alkoholen, wie Ameisensäureethylester, Ameisensäure-n-propylester, Ameisensäureisopropylester, Ameisensäure-n-butylester, Ameisensäureisobutylester, Ameisensäure-tert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester, Propionsäuremethylester, Propionsäureethylester, Propionsäure-n-propylester, Propionsäureisopropylester, Propionsäure-n-butylester, Propionsäureisobutylester, Propionsäure-tert.-butylester, Propionsäureamylester, Buttersäuremethylester, Buttersäureethylester, Buttersäure-n-propylester, Buttersäureisopropylester, lineare oder cyclische aliphatische Ether, wie Diisopropylether, 1,3- oder 1,4-Dioxan, Tetrahydrofuran oder Ethylenglykoldimethylether, Methylglycolacetat, Diethylcarbonat, lineare oder cyclische aliphatische $C_3$- bis $C_7$-Ketone, wie Aceton, Methylethylketon, Methylisobutylketon, 2- bzw. 3-Hexanon, 2-, 3- bzw. 4-Heptanon, Cyclopentanon, oder Cyclohexanon. Besonders bevorzugte Lösungsmittel sind die genannten Ester aus aliphatischen $C_1$- bis $C_5$-Carbonsäuren oder aromatischen Carbonsäuren mit aliphatischen $C_1$- bis $C_5$-Alkoholen, insbesondere jedoch Essigsäureethylester und Buttersäureethylester sowie $C_4$- bis $C_6$-Ketone, insbesondere Methylethylketon. Günstig ist es, wenn das Löungsmittel bei Atmosphärendruck (1 atm = 1,013 bar absolut) einen Siedepunkt ≤ 140 °C, häufig ≤ 125 °C und insbesondere ≤ 100 °C aufweist oder mit Wasser ein niedrig siedendes Wasser/Lösungsmittel-Azeotropgemisch bildet. Selbstverständlich kann auch eine Mischung mehrerer Lösungsmittel eingesetzt werden.

Die Menge an Lösungsmittel bei der Herstellung des Polymerisats A beträgt 40 bis 9900 Gew.-Teile, bevorzugt 70 bis 400 Gew.-Teile und insbesondere bevorzugt 80 bis 200 Gew.-Teile, jeweils bezogen auf 100 Gew.-Teile Gesamtmonomeren A.

Bei der Herstellung des Polymerisats A ist es möglich, gegebenenfalls eine Teil- oder die Gesamtmenge an Lösungsmittel im Polymerisationsgefäß vorzulegen. Es ist aber auch möglich, die Gesamtmenge oder die gegebenenfalls verbliebene Restmenge an Lösungsmittel während der Polymerisationsreaktion zuzudosieren. Die Gesamtmenge oder die gegebenenfalls verbliebene Restmenge an Lösungsmittel kann dem Polymerisationsgefäß dabei diskontinuierlich in einer oder mehreren Portionen oder kontinuierlich mit gleichbleibenden oder sich verändernden Mengenströmen zudosiert werden. Vorteilhaft wird eine Teilmenge des Lösungsmittels als Polymerisationsmedium vor Initiierung der Polymerisationsreaktion im Polymerisationsgefäß vorgelegt und die verbliebene Restmenge gemeinsam mit den Monomeren A1 bis A4 und dem Radikalinitiator während der Polymerisationsreaktion zudosiert.

Die radikalische Polymerisation der Monomeren A1 bis A4 wird durch so genannte Radikalinitiatoren initiiert und aufrechterhalten. Als Radikalinitiatoren (radikalbildende Initiatoren) sind vorzugsweise alle diejenigen radikalbildenden Initiatoren geeignet, welche bei Polymerisationstemperatur eine Halbwertszeit ≤ 3 Stunden, insbesondere ≤ 1 Stunde und vorteilhaft ≤ 30 Minuten aufweisen.

Wird die Polymerisation der Monomeren A1 bis A4 in wässrigem Medium durchgeführt, werden so genannte wasserlösliche Radikalinitiatoren, welche der Fachmann üblicherweise bei der radikalisch initiierten wässrigen Emulsionspolymerisation verwendet, eingesetzt. Wird dagegen die Polymerisation der Monomeren in einem organischen Lösungsmittel durchgeführt, werden so genannte öllösliche Radikalinitiatoren, welche der Fachmann üblicherweise bei der radikalisch initiierten Lösungspolymerisation verwendet, eingesetzt.

Als öllösliche Radikalinitiatoren seien beispielhaft genannt Dialkyl- bzw. Diarylperoxide, wie Di-tert.-amylperoxid, Dicumylperoxid, Bis(tert.-butylperoxiisopropyl)benzol, 2,5-Bis(tert.-butylperoxi)-2,5-dimethylhexan, tert.-Butylcumolperoxid, 2,5-Bis(tert.-butylperoxi)-2,5-dimethyl-3-hexen, 1,1-Bis(tert.-butylperoxi)-3,3,5-trimethylcyclohexan, 1,1-Bis (tert.-butylperoxi)cyclohexan, 2,2-Bis(tert.-butylperoxi)butan oder Di-tert.-butylperoxid, aliphatische und aromatische Peroxiester, wie Cumylperoxineodecanoat, 2,4,4-Trimethylpentyl-2-peroxineodecanoat, tert.-Amylperoxineodecanoat, tert.-Butylperoxineodecanoat, tert.-Amylperoxipivalat, tert.-Butylperoxipivalat, tert.-Amylperoxi-2-ethylhexanoat, tert.-Butylperoxi-2-ethylhexanoat, tert.-Butylperoxidiethylacetat, 1,4-Bis(tert.-butylperoxi)cyclohexan, tert.-Butylperoxiisobutanoat, tert.-Butylperoxi-3,5,5-trimethylhexanoat, tert.-Butylperoxiacetat, tert.-Amylperoxibenzoat oder tert.-Butylperoxibenzoat, Dialkanoyl- bzw. Dibenzoylperoxide, wie Diisobutanoylperoxid, Bis(3,5,5-trimethylhexanoyl)peroxid, Dilauroylperoxid, Didecanoylperoxid, 2,5-Bis(2-ethylhexanoylperoxi)-2,5-dimethylhexan oder Dibenzoylperoxid, sowie Peroxicarbonate, wie Bis(4-tert.-butylcyclohexyl)peroxidicarbonat, Bis(2-ethylhexyl)peroxidicarbonat, Di-tert.-butylperoxidicarbonat, Diacetylperoxidicarbonat, Dimyristylperoxidicarbonat, tert.-Butylperoxiisopropylcarbonat oder tert.-Butylperoxi-2-ethylhexylcarbonat. Als gut öllösliche Azoinitiatoren finden beispielsweise 2,2'-Azobis(isobutyronitril), 2,2'-Azobis(2,4-dimethylvaleronitril) oder 4,4'-Azobis(4-cyanopentansäure) Verwendung.

Bevorzugt wird als öllöslicher Radikalinitiator eine Verbindung ausgewählt aus der Gruppe umfassend tert.-Butylperoxi-2-ethylhexanoat (Trigonox® 21; Trigonox® Marke der Fa. Akzo Nobel), tert.-Amylperoxi-2-ethylhexanoat (Trigonox® 121), tert.-Butylperoxibenzoat (Trigonox® C), tert.-Amylperoxibenzoat, tert.-Butylperoxiacetat (Tri-gonox® F), tert.-Butylperoxi-3,5,5-trimethylhexanoat (Trigonox® 42 S), tert.-Butylperoxiisobutanoat, tert.-Butylperoxidiethylacetat (Trigonox® 27), tert.-Butylperoxipivalat (Trigonox® 25), tert.-Butylperoxiisopropylcarbonat, (Trigonox® BPIC), 2,5-Dimethyl-2,5-di(tert.-butylperoxi)hexan (Trigonox® 101), Di-tert.-butylperoxid (Tri-gonox® B), Cumylhydroperoxid (Trigonox® K) und tert.-Butylperoxi-2-ethylhexylcarbonat (Trigonox® 117) eingesetzt. Selbstverständlich ist es auch möglich, Gemische vorgenannter öllöslicher Radikalinitiatoren einzusetzten.

Die Menge an eingesetztem Radikalinitiators beträgt in der Regel 0,01 bis 10 Gew.-%, bevorzugt 0,1 bis 8 Gew.-% und insbesondere bevorzugt 1 bis 6 Gew.-%, jeweils bezogen auf die Gesamtmonomerenmenge A.

Bei der Herstellung des Polymerisats A ist es möglich, gegebenenfalls eine Teil- oder die Gesamtmenge an Radikalinitiator im Polymerisationsgefäß vorzulegen. Es ist aber auch möglich, die Gesamtmenge oder die gegebenenfalls verbliebene Restmenge an Radikalinitiator während der Polymerisationsreaktion zuzudosieren. Die Gesamtmenge oder die gegebenenfalls verbliebene Restmenge an Radikalinitiator kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Radikalinitiator während der Polymerisationsreaktion kontinuierlich mit gleichbleibendem Mengenstrom - insbesondere in Form einer Lösung des Radikalinitiators mit dem verwendeten Lösungsmittel.

Vorteilhaft weist das Polymerisat A ein gewichtsmittleres Molekulargewicht ≥ 1000 g/mol und ≤ 100000 g/mol auf. Günstig ist es, wenn das gewichtsmittlere Molekulargewicht von Polymerisat A ≤ 50000 g/mol oder ≤ 40000 g/mol ist. Insbesondere vorteilhaft weist das Polymerisat A ein gewichtsmittleres Molekulargewicht ≥ 3000 g/mol und ≤ 40000 g/mol auf. Mit besonderem Vorteil liegt das gewichtsmittleres Molekulargewicht im Bereich ≥ 3000 und ≤ 25000 g/mol. Die Einstellung des gewichtsmittleren Molekulargewichts bei der Herstellung von Polymerisat A ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts ist dem Fachmann geläufig und erfolgt beispielsweise mittels Gelpermeationschromatograpie.

Geeignete Radikalkettenregler sind beispielsweise Schwefel in gebundener Form enthaltende organische Verbindungen. Hierzu gehören beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Weitere Radikalkettenregler sind dem Fachmann geläufig. Falls die Polymerisation in Gegenwart von Radikalkettenreglern durchgeführt wird, werden häufig 0,01 bis 10 Gew.-% und oft 0,1 bis 5 Gew.-%, jeweils bezogen auf die Gesamtmonomerenmenge A, verwendet.

Erfindungsgemäß kann wenigstens eine Teilmenge des Radikalkettenreglers im Polymerisationsmedium vorgelegt werden und die gegebenenfalls verbliebene Restmenge dem Polymerisationsmedium nach Initiierung der radikalischen Polymerisationsreaktion diskontinuierlich in einer Portion, diskontinuierlich in mehreren Portionen sowie kontinuierlich mit gleich bleibenden oder sich verändernden Mengenströmen zugegeben werden. Häufig wird die Gesamtmenge des Radikalkettenreglers gemeinsam mit den Monomeren A1 bis A4 während der Polymerisationsreaktion kontinuierlich zugegeben.

Durch gezielte Variation von Art und Menge der Monomeren A1 bis A4 ist es dem Fachmann erfindungsgemäß möglich, Polymerisate A herzustellen, die eine Glasübergangstemperatur bzw. einen Schmelzpunkt im Bereich von -60 bis 270 °C aufweisen. Erfindungsgemäß vorteilhaft beträgt die Glasübergangstemperatur des Polymerisats A ≥ -20 °C und ≤ 110 °C und bevorzugt ≥ 20 °C und ≤ 105 °C.

Mit der Glasübergangstemperatur Tg, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Nach Fox (T.G. Fox, Bull. Am. Phys. Soc. 1956 [Ser. II] 1, Seite 123 und gemäß Ull-mann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die radikalisch initiierte Polymerisation erfolgt - abhängig vom verwendeten Radikalinitiator— üblicherweise bei Temperaturen im Bereich von 40 bis 180 °C, vorzugsweise von 50 bis 150 °C und insbesondere von 60 bis 110 °C. Sobald die Temperatur bei der Polymerisationsreaktion oberhalb des Siedepunktes des Lösungsmittels und/oder einem der Monomeren A1 bis A4 liegt, wird die Polymerisation vorteilhaft unter Druck (> 1 atm absolut) durchgeführt. Die Temperatur- und Druckbedingungen sind dem Fachmann geläufig oder können von diesem in wenigen Routineversuchen ermittelt werden.

Die Herstellung der Polymerisate A kann in den üblichen Polymerisationsvorrichtungen erfolgen. Hierzu verwendet man beispielsweise Glaskolben (Labor) oder Rührkessel (technischer Maßstab), die mit einem Anker-, Blatt-, Impeller-, Kreuzbalken-, MIG- oder Mehrstufenimpulsgegenstromrührer ausgestattet sind. Insbesondere bei der Polymerisation in Anwesenheit lediglich kleiner Mengen an Lösungsmittel kann es auch vorteilhaft sein, die Polymerisation in üblichen ein- oder zweiwelligen (gleich- oder gegenläufig) Kneterreaktoren, wie beispielsweise solchen der Fa. List oder Buss SMS durchzuführen.

Erfolgt die Herstellung von Polymerisat A in einem organischen Lösungsmittel, so wird in der Regel das organische Lösungsmittel anschließend zumindest teilweise, vorteilhaft zu ≥ 50 Gew.-% oder ≥ 90 Gew.-% und insbesondere vorteilhaft vollständig entfernt und das Polymerisat A in Wasser, vorteilhaft in entionisiertem Wasser aufgenommen. Die entsprechenden Verfahren sind dem Fachmann geläufig. So kann beispielsweise der Austausch des Lösungsmittels gegen Wasser derart erfolgen, dass das Lösungsmittel, beispielsweise bei Normaldruck (1 atm absolut) oder im Unterdruck (< 1 atm absolut) zumindest teilweise, vorteilhaft vollständig in einer oder mehreren Stufen abdestilliert und durch Wasser ersetzt wird. Häufig kann es günstig sein, das Lösungsmittel durch Einleiten von Wasserdampf aus der Lösung zu entfernen und dabei gleichzeitig durch Wasser zu ersetzen. Dies ist insbesondere dann der Fall, wenn das organische Lösungsmittel eine gute Wasserdampfflüchtigkeit aufweist.

Die erfindungsgemäß eingesetzten Polymerisat-A-Lösungen weisen üblicherweise Polymerisatfeststoffgehalte von ≥ 10 und ≤ 70 Gew.-%, häufig ≥ 20 und ≤ 65 Gew.-% und oft ≥ 40 und ≤ 60 Gew.-%, jeweils bezogen auf die entsprechende Polymerisat-A-Lösung auf.

Das erfindungsgemäße wässrige Bindemittel enthält als wesentliche zweite Komponente ein durch radikalische Polymerisation erhältliches Polymerisat B, welches 0,1 bis 15 Gew.-% wenigstens einer, wenigstens eine Carboxyl-, Hydroxyalkyl-, Epoxyl-, Methylol-, Silyl- und/oder Oxazolinylgruppe aufweisende, ethylenisch ungesättigten Verbindung [Monomer B1] und 85 Gew.-% bis 99,9 Gew.-% wenigstens einer anderen, mit dem Monomer B1 copolymerisierbaren ethylenisch ungesättigten Verbindung [Monomer B2] in einpolymerisierter Form enthält, wobei sich die Monomerenmengen B1 und B2 zu 100 Gew.-% addieren.

Als Monomere B1 kommen ethylenisch ungesättigte $C_3$- bis $C_6$-Mono- oder Dicarbonsäuren, insbesondere $C_3$- und $C_4$-Mono- oder Dicarbonsäuren, wie beispielsweise Acrylsäure, Methacrylsäure, Crotonsäure, Fumarsäure, Maleinsäure, 2-Methylmaleinsäure und/oder Itakonsäure, deren Alkalimetall- oder Ammoniumsalze oder deren Anhydride, wie beispielsweise Maleinsäureanhydrid in Betracht. Als Monomere B1 können ebenfalls alle ethylenisch ungesättigten Monomeren Verwendung finden, welche wenigstens eine Hydroxyalkylgruppe enthalten, wie beispielsweise Hydroxyalkylacrylate und -methacrylate mit $C_2$- bis $C_{10}$-Hydroxyalkylgruppen, vorteilhaft $C_2$- bis $C_4$-Hydroxyalkylgruppen, wie insbesondere 2-Hydroxyethylacrylat, 2-Hydroxyethylmethacrylat, 2-Hydroxyproplylacrylat, 2-Hydroxypropylmethacrylat, 4-Hydroxybutylacrylat, 4-Hydroxybutylmethacrylat, Diethylenglykolmonoacrylat oder Diethylenglykolmonomethacrylat sowie Hydroxyalkylvinylether $C_2$- bis $C_{10}$-Hydroxyalkylgruppen, vorteilhaft $C_2$- bis $C_4$-Hydroxyalkylgruppen, wie beispielsweise 2-Hydroxyethylvinylether, 3-Hydroxypropylvinylether, 2-Hydroxypropylvinylether oder 4-Hydroxybutylvinylether. Ebenso finden als Monomere B1 epoxylgruppenhaltige ethylenisch ungesättigte Verbindungen, wie beispielsweise Glycidylacrylat oder Glycidylmethacrylat, methylolamidgruppenhaltige ethylenisch ungesättigte Verbindungen, wie beispielsweise N-Methylolacrylamid und/oder N-Methylolmethacrylamid Verwendung. Als Monomere B1 kommen ebenfalls alle ethylenisch ungesättigten Verbindungen in Betracht, welche wenigstens eine Oxazolinylgruppe aufweisen, wie beispielsweise 2-Isopropenyl-2-oxazolin, 5-(2-Oxazolinyl)pentylacrylat oder 5-(2-Oxazolinyl)pentylmethacrylat oder wenigstens eine siliziumhaltige funktionelle Gruppe (Silylgruppe) tragen, wie beispielsweise Vinylalkoxysilane, insbesondere Vinyltrimethoxysilan, Vinyltriethoxysilan, Vinyltriisopropoxysilan, Vinyltriphenoxysilan, Vinyltris(dimethylsiloxy)silan, Vinyltris(2-methoxyethoxy)silan, Vinyltris(3-methoxypropoxy)silan und/oder Vinyltris(trimethylsiloxy) silan, Vinylalkoxycarbonylsilane, insbesondere Vinyltrimethoxycarbonylsilan (Vinyltriacetoxysilan), Vinyltriethoxycarbonylsilan und/oder Vinyltriisopropoxycarbonylsilan, Acryloxysilane, wie insbesondere 2-(Acryloxyethoxy)trimethylsilan, Acryloxymethyltrimethylsilan, (3-Acryloxypropyl)dimethylmethoxysilan, (3-Acryloxypropyl)methylbis(trimethylsiloxy) silan, (3-Acryloxypropyl)methyldimethoxysilan, (3-Acryloxypropyl)trimethoxysilan und/oder (3-Acryloxypropyl)tris(trimethylsiloxy)silan, oder Methacryloxysilane, wie insbesondere (3-Methacryloxypropyl)trimethoxysilan, (3-Methacryloxypropyl)triethoxysilan (Methacryloxymethyl)methyldiethoxysilan und/oder (3-Methacryloxypropyl)methyldiethyloxysilan.

Bevorzugt ist das Monomer B1 ausgewählt aus der Gruppe umfassend Acrylsäure, Methacrylsäure, Crotonsäure, Fumarsäure, Maleinsäure, Maleinsäureanhydrid, Methylmaleinsäure, Itakonsäure, 2-Hydroxyethylacrylat, 2-Hydroxyethylmethacrylat, 2-Hydroxypropylacrylat, 2-Hydroxypropylmethacrylat, 4-Hydroxybutylacrylat, Diethylenglykolmonoacrylat, 4-Hydroxybutylvinylether, Glycidylacrylat, Glycidylmethacrylat, N-Methylolacrylamid, N-Methylolmethacrylamid, 2-Isopropenyl-2-oxazolin, 5-(2-Oxazolinyl)pentylmethacrylat, (3-Methacryloxypropyl)trimethoxysilan, Vinyltriacetoxysilan und Vinyltriethoxysilan.

Polymerisat B enthält 0,1 bis 15 Gew.-%, bevorzugt 1 bis 14 Gew.-% und insbesondere bevorzugt 4 bis 12 Gew.-% an Monomeren B1 in einpolymerisierter Form.

Als Monomere B2 kommen insbesondere in einfacher Weise mit den Monomeren B1 radikalisch copolymerisierbare ethylenisch ungesättigte Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itakonsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, Nitrile

$\alpha,\beta$-monoethylenisch ungesättigter Carbonsäuren, wie Acrylnitril sowie $C_{4-8}$-konjugierte Diene, wie 1,3-Butadien und Isopren. Die genannten Monomere bilden in der Regel die Hauptmonomeren, die, bezogen auf die Gesamtmenge der Monomeren B2 normalerweise einen Anteil von ≥ 50 Gew.-%, ≥ 80 Gew.-% oder ≥ 90 Gew.-% auf sich vereinen. In aller Regel weisen diese Monomeren in Wasser bei Normalbedingungen [20 °C, 1 atm (absolut)] lediglich eine mäßige bis geringe Löslichkeit auf.

Weitere Monomere B2, die üblicherweise die innere Festigkeit der Verfilmungen der Polymermatrix erhöhen, weisen normalerweise wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Im Normalfall werden die vorgenannten vernetzende Monomeren B2 lediglich als modifizierende Monomere in Mengen von ≤ 5 Gew.-%, oft 0,1 bis 3 Gew.-% und häufig 0,5 bis 2 Gew.-%, jeweils bezogen auf die Gesamtmenge an Monomeren B2, verwendet.

Daneben können als Monomere B2 zusätzlich solche ethylenisch ungesättigten Monomere eingesetzt werden, die entweder wenigstens eine Säuregruppe (außer der Carboxylgruppe) und/oder deren entsprechendes Anion (Monomere B2S), oder solche ethylenisch ungesättigten Monomere, die wenigstens eine Amino-, Amido-, Ureido- oder N-heterocyclische Gruppe (außer der Oxazolinylgruppe) und/oder deren am Stickstoff protonierten oder alkylierten Ammoniumderivate (Monomere B2A) enthalten. Im Normalfall werden die vorgenannten Monomeren B2S oder B2A lediglich als modifizierende Monomere in Mengen von ≤ 5 Gew.-%, oft ≤ 3 Gew.-% und häufig ≤ 1 Gew.-%, jeweils bezogen auf die Gesamtmenge an Monomeren B2, verwendet. Bevorzugt werden jedoch keinerlei derartiger Monomere B2S oder B2A verwendet.

Als Monomere B2S werden ethylenisch ungesättigte Monomere mit wenigstens einer Säuregruppe eingesetzt. Dabei kann die Säuregruppe beispielsweise eine Sulfonsäure-, Schwefelsäure-, Phosphorsäure- und/oder Phosphonsäuregruppe sein. Beispiele für solche Monomere B2S sind 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat. Selbstverständlich lassen sich aber auch die Ammonium- und Alkalimetallsalze der vorgenannten wengistens eine Säuregruppe aufweisenden ethylenisch ungesättigten Monomeren verwenden. Als Alkalimetall insbesondere bevorzugt ist Natrium und Kalium. Beispiele hierfür sind die Ammonium-, Natrium- und Kaliumsalze der 4-Styrolsulfonsäure, 2-Methacryloxyethylsulfonsäure, Vinylsulfonsäure und Vinylphosphonsäure sowie die Mono- und Di-Ammonium-, -Natrium- und - Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Als Monomere B2A werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere B2A, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)ethylmethacrylat, 2-(N-Ethylamino)ethylacrylat, 2-(N-Ethylamino)ethylmethacrylat, 2-(N-n-Propylamino)ethylacrylat, 2-(N-n-Propylamino)ethylmethacrylat, 2-(N-iso-Propylamino)ethylacrylat, 2-(N-iso-Propylamino)ethylmethacrylat, 2-(N-tert.-Butylamino)ethylacrylat, 2-(N-tert.-Butylamino)ethylmethacrylat (beispielsweise kommerziell verfügbar als Norsocryl® TBAEMA der Fa. Elf Atochem), 2-(N,N-Dimethylamino)ethylacrylat (beispielsweise kommerziell verfügbar als Norsocryl® A-DAME der Fa. Elf Atochem), 2-(N,N-Dimethylamino)ethylmethacrylat (beispielsweise kommerziell verfügbar als Norsocryl® MADAME der Fa. Elf Atochem), 2-(N,N-Diethylamino)ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-iso-propylamino)ethylacrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethylamino)propylmethacrylat, 3-(N,N-Di-n-propylamino)propylacrylat, 3-(N,N-Di-n-propylamino)propylmethacrylat, 3-(N,N-Di-iso-propylamino)propylacrylat und 3-(N,N-Di-iso-propylamino)propylmethacrylat.

Beispiele für Monomere B2A, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N, N'-Methylenbisacrylamid, N-(Diphenylmethyl)acrylamid, N-Cyclohexylacrylamid, aber auch N-Vinylpyrrolidon und N-Vinylcaprolactam.

Beispiele für Monomere B2A, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl® 100 der Fa. Elf Atochem).

Beispiele für Monomere B2A, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Abhängig vom pH-Wert des wässrigen Reaktionsmediums kann ein Teil oder die Gesamtmenge der vorgenannten stickstoffhaltigen Monomere B2A in der am Stickstoff protonierten quartären Ammoniumform vorliegen.

Selbstverständlich können auch Gemische der vorgenannten ethylenisch ungesättigten Monomere B2S oder B2A eingesetzt werden.

Als Monomere B2 bevorzugt sind Styrol, Vinylacetat, Acrylnitril, 1,3-Butadien, Methylmethacrylat, Ethylacrylat, n-Butylacrylat, n-Butylmethacrylat und/oder 2-Ethylhexylacrylat, wobei Styrol, Methylmethacrylat, n-Butylacrylat und/oder 2-Ethylhexylacrylat insbesondere bevorzugt sind.

Polymerisat B enthält 85 bis 99,9 Gew.-%, bevorzugt 86 bis 99 Gew.-% und insbesondere bevorzugt 88 bis 96 Gew.-% an Monomeren B2 in einpolymerisierter Form.

In einer bevorzugten Ausführungsform ist das Polymerisat B in einpolymerisierter Form aufgebaut aus:

| | |
|---|---|
| 40 bis 56 Gew.-% | Styrol |
| 40 bis 56 Gew.-% | n-Butylacrylat |
| 2 bis 7 Gew.-% | 2-Hydroxyethylacrylat und |
| 2 bis 7 Gew.-% | Glycidylmethacrylat. |

Die erfindungsgemäß einsetzbaren Polymerisate B weisen vorteilhaft eine Glasübergangstemperatur Tg $\geq$ -40 und $\leq$ 110 °C, bevorzugt $\geq$ 0 und $\leq$ 105 °C und insbesondere bevorzugt $\geq$ 0 und $\leq$ 100 °C auf.

Die Herstellung des Polymerisats B an sich ist unkritisch und dem Fachmann prinzipiell geläufig. Sie erfolgt im Wesentlichen durch radikalisch initiierte Polymerisation der Monomeren B1 und B2. Dabei kann die radikalische Polymerisation der Monomeren B1 und B2 prinzipiell in Substanz (Substanzpolymerisation), in einem organischen Lösungsmittel (Lösungspolymerisation) oder emulgiert in einem wässrigen Medium (wässrige Emulsions- oder Suspensionspolymerisation) erfolgen. Bevorzugt erfolgt die Herstellung des Polymerisats B durch radikalisch initiierte Emulsionspolymerisation der Monomeren B1 und B2 in wässrigem Medium.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass man die ethylenisch ungesättigten Monomere unter Mitverwendung von Dispergierhilfsmitteln, im wässrigen Medium in Form von Monomerentröpfchen dispers verteilt und mittels eines wasserlöslichen radikalischen Polymerisationsinitiators polymerisiert. Von dieser allgemeinen Verfahrensweise unterscheidet sich die Herstellung des Polymerisats B lediglich im Einsatz der voran genannten spezifischen Monomeren B1 und B2.

Bei der Herstellung der Polymerisate B ist es möglich, gegebenenfalls jeweils eine Teil- oder die Gesamtmenge der Monomeren B1 und B2 im Polymerisationsgefäß vorzulegen. Es ist aber auch möglich, jeweils die Gesamtmenge oder die jeweils gegebenenfalls verbliebene Restmenge der Monomeren B1 und B2 während der Polymerisationsreaktion zuzudosieren. Die Gesamtmengen oder die gegebenenfalls verbliebenen Restmengen an Monomeren B1 und B2 können dem Polymerisationsgefäß dabei diskontinuierlich in einer oder mehreren Portionen oder kontinuierlich mit gleichbleibenden oder sich verändernden Mengenströmen zudosiert werden. Mit Vorteil werden die Monomeren B1 und B2 gemeinsam als Monomerengemisch, insbesondere in Form einer wässrigen Monomerenemulsion eingesetzt.

Die Auslösung der radikalisch initiierten Polymerisationsreaktion bei der Herstellung des erfindungsgemäß eingesetzten Polymerisats B erfolgt mittels eines dem Fachmann für die wässrige Emulsionspolymeriation geläufigen Radikalinitiators. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder DiCumylperoxid eingesetzt werden. Als Azoverbindung finden im wesentlichen 2,2'-Azobis (isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/ oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge B, 0,01 bis 5 Gew.-%, bevorzugt 0,1 bis 3 Gew.-% und insbesondere bevorzugt 0,2 bis 1,5 Gew.-%.

Die Polymerisationsreaktion erfolgt dabei unter Temperatur- und Druckbedingungen, unter denen die radikalisch initiierte wässrige Emulsionspolymerisation mit ausreichender Polymerisationsgeschwindigkeit verläuft; sie ist dabei insbesondere abhängig vom verwendeten Radikalinitiator. Vorteilhaft werden Art und Menge des Radikalinitiators, Polymerisationstemperatur und Polymerisationsdruck so ausgewählt, dass der Radikalinitiator eine Halbwertszeit ≤ 3 Stunden, insbesondere vorteilhaft ≤ 1 Stunde und ganz besonders vorteilhaft ≤ 30 Minuten aufweist.

Erfindungsgemäß ist es möglich, gegebenenfalls eine Teil- oder die Gesamtmenge an Radikalinitiator im Polymerisationsgefäß vorzulegen. Es ist aber auch möglich, die Gesamtmenge oder die gegebenenfalls verbliebene Restmenge an Radikalinitiator während der Polymerisationsreaktion zuzudosieren. Die Gesamtmenge oder die gegebenenfalls verbliebene Restmenge an Radikalinitiator kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Radikalinitiator während der Polymerisationsreaktion kontinuierlich mit gleichbleibendem Mengenstrom - insbesondere in Form einer wässrigen Lösung des Radikalinitiators.

Abhängig vom gewählten Radikalinitiator kommt als Reaktionstemperatur für die radikalische initiierte wässrige Emulsionspolymerisation der gesamte Bereich von 0 bis 170 °C in Betracht. Dabei werden in der Regel Temperaturen von 50 bis 120 °C, insbesondere 60 bis 110 °C und vorteilhaft 70 bis 100 °C angewendet. Die erfindungsgemäße radikalische initiierte Polymerisationsreaktion kann bei einem Druck kleiner, gleich oder größer 1 atm (1,013 bar absolut) durchgeführt werden, so dass die Polymerisationstemperatur 100 °C übersteigen und bis zu 170 °C betragen kann. Vorzugsweise werden leichtflüchtige Monomere, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Polymerisationsreaktionen im Unterdruck durchgeführt, werden Drücke von 950 mbar, häufig von 900 mbar und oft 850 mbar (absolut) eingestellt. Vorteilhaft wird die erfindungsgemäße radikalische initiierte Polymerisation bei 1 atm (absolut) unter Inertgasatmosphäre, wie beispielsweise unter Stickstoff oder Argon durchgeführt.

Bei der Herstellung des erfindungsgemäß eingesetzten Polymerisats B durch radikalisch initiierte wässrige Emulsionspolymerisation werden häufig Dispergierhilfsmittel mitverwendet, die sowohl die Monomerentröpfchen als auch die durch die radikalisch initiierte Polymerisation erhaltenen Teilchen des Polymerisats B in der wässrigen Phase dispers verteilt halten und so die Stabilität der erzeugten wässrigen Polymerisatdispersion gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961.

Selbstverständlich können auch Gemische aus Emulgatoren und/oder Schutzkolloiden verwendet werden. Vorteilhaft werden jedoch als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest:

$C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 3 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

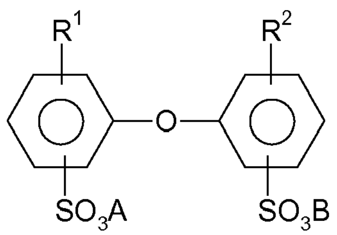

Formel (I)

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4 269 749, und im Handel erhältlich.

Bevorzugt werden zur Herstellung des Polymerisats B ausschließlich nichtionische und/oder anionische Emulgatoren verwendet.

In der Regel beträgt die Menge an eingesetztem Dispergierhilfsmittel, insbesondere Emulgatoren, 0,1 bis 10 Gew.-%, bevorzugt 1 bis 5 Gew.-%, jeweils bezogen auf die Gesamtmonomerenmenge B.

In der Regel erfolgt die Herstellung des erfindungsgemäß verwendeten Polymerisats B vorteilhaft dergestalt, dass in einem Polymerisationsgefäß bei 20 bis 25 °C (Raumtemperatur) und Atmosphärendruck unter Inertgasatmospäre wenigstens eine Teilmenge des verwendeten entionisierten Wassers, gegebenenfalls eine Teilmenge des Radikalinitiators, des Dispergierhilfsmittels und der Monomeren B1 und B2 vorgelegt werden, daran anschließend das Vorlagengemisch unter Rühren auf die geeignete Polymerisationstemperatur aufgeheizt wird und danach die gegebenenfalls verbliebene Restmenge oder die Gesamtmenge des Radikalinitiators, Dispergierhilfsmittels und der Monomeren B1 und B2 dem wässrigen Polymerisationsgemisch unter Polymerisationsbedingungen zudosiert werden.

Die erhaltenen wässrigen Polymerisatdispersionen weisen üblicherweise Polymerfeststoffgehalte an Polymerisat B von $\geq 10$ und $\leq 70$ Gew.-%, häufig $\geq 20$ und $\leq 65$ Gew.-% und oft $\geq 40$ und $\leq 60$ Gew.-%, jeweils bezogen auf die wässrige Polymerisatdispersion, auf. Der über quasielastische Lichtstreuung (ISO-Norm 13321) ermittelte zahlenmittlere Teilchendurchmesser der Emulsionspolymerisate B (cumulant z-average) liegt in der Regel zwischen 10 und 2000 nm, vorteilhaft zwischen 20 und 1000 nm und insbesondere vorteilhaft zwischen 50 und 700 nm bzw. 80 bis 400 nm.

Selbstverständlich können bei der Herstellung des Polymerisats B durch radikalisch initiierte wässrige Emulsionspolymerisation auch weitere, dem Fachmann geläufige optionale Hilfsstoffe, wie beispielsweise sogenannte Verdicker, Entschäumer, Neutralisationsmittel, Puffersubstanzen, Konservierungsmittel und/oder radikalkettenübertragende Verbindungen eingesetzt werden.

Das erfindungsgemäße wässrige Bindemittel enthält neben dem Polymerisat A und dem Polymerisat B noch ein Polyol C, welches wenigstens 2 Hydroxylgruppen aufweist. Dabei werden vorteilhaft solche Polyole C verwendet, die bei den Temperaturen der Trocknung bzw. Aushärtung nicht flüchtig sind und daher einen entsprechend niedrigen Dampfdruck aufweisen.

Dabei kann das Polyol C prinzipiell eine Verbindung mit einem Molekulargewicht $\leq$ 1000 g/mol oder eine polymere Verbindung mit einem Molekulargewicht > 1000 g/mol sein. Als polymere Verbindungen mit wenigstens 2 Hydroxylgruppen seien beispielhaft Polyvinylalkohol, teilhydrolysiertes Polyvinylacetat, Homo- oder Copolymerisate von Hydroxyalkylacrylaten oder Hydroxyalkylmethacrylaten, wie beispielsweise Hydroxyethylacrylat bzw. -methacrylat oder Hydroxypropylacrylat bzw. -methacrylat genannt. Beispiele weiterer polymerer Polyole C finden sich u.a. in WO 97/45461, Seite 3, Zeile 3 bis Seite 14, Zeile 33.

Als Polyol C mit einem Molekulargewicht < 1000 g/mol kommen alle die organischen Verbindung in Betracht,

die wenigstens 2 Hydroxylgruppen und ein Molekulargewicht < 1000 g/mol aufweisen. Beispielhaft genannt seien Ethylenglykol, 1,2-Propylenglykol, 1,2,3-Propantriol (Glyzerin), 1,2- bzw. 1,4-Butandiol, Pentaerythrit, Trimethylolpropan, Sorbit, Saccharose, Glucose, 1,2-, 1,4- bzw. 1,4-Dihydroxybenzol, 1,2,3-Trihydroxybenzol, 1,2-, 1,3- bzw. 1,4-Dihydroxycyclohexan sowie bevorzugt Alkanolamine, wie beispielsweise Verbindungen der allgemeinen Formel II

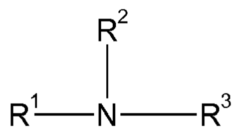

Formel (II),

in der $R^1$ für ein H-Atom, eine $C_1$-$C_{10}$-Alkylgruppe oder eine $C_2$-$C_{10}$-Hydroxyalkylgruppe steht und $R^2$ und $R^3$ für eine $C_2$-$C_{10}$-Hydroxyalkylgruppe stehen.

Besonders bevorzugt stehen $R^2$ und $R^3$ unabhängig voneinander für eine $C_{2-}C_5$-Hydroxyalkylgruppe und $R^1$ für ein H-Atom, eine $C_1$-$C_5$-Alkylgruppe oder eine $C_2$-$C_5$-Hydroxyalkylgruppe.

Als Verbindungen der Formel II seien insbesondere Diethanolamin, Triethanolamin, Diisopropanolamin, Triisopropanolamin, Methyldiethanolamin, Butyldiethanolamin und/oder Methyldiisopropanolamin genannt.

Beispiele weiterer Polyole C mit einem Molekulargewicht ≤ 1000 g/mol finden sich ebenfalls in WO 97/45461, Seite 3, Zeile 3 bis Seite 14, Zeile 33.

Bevorzugt wird das Polyol C ausgewählt aus der Gruppe umfassend Diethanolamin, Triethanolamin, Diisopropanolamin, Triisopropanolamin, Methyldiethanolamin, Butyldiethanolamin und/oder Methyldiisopropanolamin, wobei Triethanolamin insbesondere besonders bevorzugt ist.

Bei den erfindungsgemäß einsetzbaren wässrigen Bindemittel werden das Polymerisat A, das Polymerisat B und das Polyol C bevorzugt in einem solchen Mengenverhältnis zueinander eingesetzt, dass das Gewichtsverhältnis (auf Feststoffbasis) von Polymerisat A zu Polymerisat B 100:1 bis 1:100, vorteilhaft 50:1 bis 1:50 und insbesondere vorteilhaft 10:1 bis 1:10 beträgt und das Gewichtsverhältnis (auf Feststoffbasis) von Polymerisat A zu Polyol C 100:1 bis 1:3, vorteilhaft 50:1 bis 1:2 und insbesondere vorteilhaft 10:1 bis 1:1 beträgt.

Die Herstellung der erfindungsgemäßen wässrigen Bindemittel ist dem Fachmann geläufig und erfolgt beispielsweise in einfacher Weise durch Mischen der wässrigen Polymerisat A-Lösungen und der wässrigen Polymerisat B-Dispersionen mit dem Polyol C oder durch Herstellung des Polymerisats B in wässrigem Medium in Anwesenheit des Polymerisats A und Hinzufügen des Polyols C zur erhaltenen wässrigen Polymerisatmischung.

Die vorgenannten wässrigen Bindemittel enthalten vorzugsweise weniger als 1,5 Gew.-%, insbesondere weniger als 1,0 Gew.-%, besonders bevorzugt weniger als 0,5 Gew.-% und ganz besonders bevorzugt weniger als 0,3 Gew.-%, insbesondere weniger als 0,1 Gew.-%, bezogen auf die Summe aus Polymerisat A, Polymerisat B und Polyol C (auf Feststoffbasis) eines Phosphor enthaltenden Reaktionsbeschleunigers. Phosphor enthaltende Reaktionsbeschleuniger sind beispielsweise in EP-A 583086 und EP-A 651088 offenbart. Es handelt sich dabei insbesondere um Alkalimetallhypophoshpite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Die wässrigen Bindemittel enthalten vorzugsweise keine Phosphor enthaltenden Reaktionsbeschleuniger bzw. keine zur Reaktionsbeschleunigung wirksame Mengen einer Phosphor enthaltenden Verbindung. Die erfindungsgemäßen Bindemittel können jedoch dem Fachmann geläufige Veresterungskatalysatoren enthalten, wie beispielsweise Schwefelsäure oder p-Toluolsulfonsäure bzw. Titanate oder Zirkonate.

Desweiteren können die erfindungsgemäßen wässrigen Bindemittel auch weitere, dem Fachmann geläufige optionale Hilfsstoffe, wie beispielsweise sogenannte Verdicker, Entschäumer, Neutralisationsmittel, Puffersubstanzen, Konservierungsmittel, feinteilige inerte Füllstoffe, wie Aluminiumsilikate, Quarz, gefällte oder pyrogene Kieselsäure, Leicht- oder Schwerspat, Talkum oder Dolomit, farbgebende Pigmente, wie Titanweiß, Zinkweiß oder Eisenoxidschwarz, Haftvermittler und/oder Flammschutzmittel enthalten.

Sollen die erfindungsgemäßen wässrigen Bindemittel als Bindemittel für Mineralfasern und/oder Glasfasern bzw. daraus hergestellte Vliese eingesetzt werden, so wird den wässrigen Bindemitteln vorteilhaft ≥ 0,001 und ≤ 5 Gew.-% und insbesondere vorteilhaft ≥ 0,05 und ≤ 2 Gew.-%, bezogen auf die Gesamtmenge an Polymerisat A, Polymerisat B und Polyol C (auf Feststoffbasis), wenigstens eines, dem Fachmann geläufigen siliziumhaltigen Haftvernetzers, beispielsweise eines Alkoxysilans, wie Methyltrimethoxysilan, n-Propyltrimethoxysilan, n-Octyltrimethoxysilan, n-Decyltriethoxysilan, n-Hexadecyltrimethoxysilan, Dimethyldimethoxysilan, Trimethylmethoxysilan, 3-Acetoxypropyltrimethoxysilan, 3-Aminopropyltrimethoxysilan, 3-Aminopropyltriethoxysilan, 3-Chloropropyltrimethoxysilan, (3-Glycidyloxypropyl)trimethoxysilan, 3-Mercaptopropyltrimethoxysilan und/oder Phenyltrimethoxysilan zugesetzt, wobei funktionalisierte Alkoxysilane, wie 3-Acetoxypropyltrimethoxysilan, 3-Aminopropyltrimethoxysilan, 3-Aminopropyltriethoxysilan, 3-Chloropropyltrimethoxysilan, (3-Glycidyloxypropyl)trimethoxysilan und/oder 3-Mercaptopropyltrimethoxysilan besonders bevorzugt sind.

Die erfindungsgemäßen wässrigen Bindemittel weisen üblicherweise Feststoffgehalte (gebildet aus der Summe an Polymerisat A, Polymerisat B und Polyol C als Feststoff gerechnet) von ≥ 5 und ≤ 70 Gew.-%, häufig ≥ 10 und ≤ 65 Gew.-% und oft ≥ 15 und ≤ 55 Gew.-%, jeweils bezogen auf das wässrige Bindemittel auf.

Die erfindungsgemäß einsetzbaren wässrigen Bindemittel weisen üblicherweise pH-Werte (gemessen bei 23 °C; mit entionisiertem Wasser auf einen Feststoffgehalt von 10 Gew.-% verdünnt) im Bereich von ≥ 1 und ≤ 10, vorteilhaft ≥ 2 und ≤ 6 und insbesondere vorteilhaft ≥ 3 und ≤ 5 auf. Dabei können zur Einstellung des pH-Wertes alle dem Fachmann geläufige basische Verbindungen eingesetzt werden. Vorteilhaft werden jedoch solche basischen Verbindungen verwendet, die bei den Temperaturen während der Trocknung bzw. Aushärtung nicht flüchtig sind, wie beispielsweise Natriumhydroxid, Kaliumhydroxid oder Natriumcarbonat.

Die erfindungsgemäßen wässrigen Bindemittel eignen sich vorteilhaft zur Verwendung als Bindemittel für körnige und/oder faserförmige Substrate. Mit Vorteil lassen sich die genannten wässrigen Bindemittel daher bei der Herstellung von Formkörpern aus körnigen und/oder faserförmigen Substraten verwenden.

Körnige und/oder faserförmige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern wie Jute, Flachs, Hanf oder Sisal, aber auch Korkschnitzel oder Sand sowie andere organische oder anorganische natürliche und/oder synthetische körnige und/oder faserförmige Verbindungen, deren längste Ausdehnung im Falle von körnigen Substraten ≤ 10 mm, bevorzugt ≤ 5 mm und insbesondere ≤ 2 mm beträgt. Selbstverständlich soll der Begriff Substrat auch die aus Fasern erhältlichen Faservliese, wie beispielsweise so genannte mechanisch verfestigte, beispielsweise genadelte oder chemisch vorgebundene Faservliese mit umfassen. Insbesondere vorteilhaft ist das erfindungsgemäße wässrige Bindemittel als formaldehydfreies Bindemittelsystem für die vorgenannten Fasern und mechanisch verfestigte oder chemisch vorgebundene Faservliese geeignet.

Das Verfahren zur Herstellung eines Formkörpers aus einem körnigen und/oder faserförmigen Substrat und dem vorgenannten wässrigen Bindemittel erfolgt vorteilhaft dergestalt, dass das erfindungsgemäße wässrige Bindemittel auf ein körniges und/oder faserförmiges Substrat aufgebracht wird (Imprägnierung), gegebenenfalls das mit dem wässrigen Bindemittel behandelte (imprägnierte) körnige und/oder faserförmige Substrat in Form gebracht wird und anschließend das behandelte (imprägnierte) körnige und/oder faserförmige Substrat einem thermischen Behandlungsschritt bei einer Temperatur ≥ 130 °C unterzogen wird, wobei das Bindemittel aushärtet.

Die Imprägnierung des körnigen und/oder faserförmigen Substrats erfolgt in der Regel dergestalt, dass das vorgenannte wässrige Bindemittel gleichmäßig auf die Oberfläche des faserförmigen und/oder körnigen Substrats aufgebracht wird. Dabei wird die Menge an wässrigem Bindemittel so gewählt, dass pro 100 g körnigem und/oder faserförmigem Substrat ≥ 1 g und ≤ 100 g, bevorzugt ≥ 2 g und ≤ 50 g und insbesondere bevorzugt ≥ 5 g und ≤ 30 g Bindemittel (berechnet als Summe der Gesamtmengen von Polymerisat A, Polymerisat B und Polyol C auf Feststoffbasis) eingesetzt werden. Die Imprägnierung des körnigen und/oder faserförmigen Substrats ist dem Fachmann geläufig und erfolgt beispielsweise durch Tränkung oder durch Besprühen des körnigen und/oder faserförmigen Substrats.

Nach der Imprägnierung wird das körnige und/oder faserförmige Substrat gegebenenfalls in die gewünschte Form gebracht, beispielsweise durch Einbringen in eine beheizbare Presse oder Form. Daran anschließend wird das in Form gebrachte imprägnierte körnige und/oder faserförmige Substrat in einer dem Fachmann geläufigen Art und Weise getrocknet und ausgehärtet.

Häufig erfolgt die Trocknung bzw. Aushärtung des gegebenenfalls in Form gebrachten imprägnierten körnigen und/oder faserförmigen Substrats in zwei Temperaturstufen, wobei die Trocknungsstufe bei einer Temperatur < 130 °C, bevorzugt ≥ 20 °C und ≤ 120 °C und insbesondere bevorzugt ≥ 40 und ≤ 100 °C und die Aushärtungsstufe bei einer Temperatur ≥ 130 °C, bevorzugt ≥ 150 und ≤ 250 °C und insbesondere bevorzugt ≥ 80 °C und ≤ 220 °C erfolgt.

Die Trocknungsstufe erfolgt dabei vorteilhaft dergestalt, dass bei einer Temperatur ≤ 100 °C so lange getrocknet wird, bis das in Form gebrachte imprägnierte körnige und/oder faserförmige Substrat, welches häufig noch nicht seine endgültige Form aufweist (sogenanntes Halbzeug) eine Restfeuchte ≤ 15 Gew.-%, bevorzugt ≤ 12 Gew.-% und insbesondere bevorzugt ≤ 10 Gew.-% aufweist. Dabei wird die Restfeuchte generell bestimmt, indem zuerst ca. 1 g des erhaltenen Halbzeugs bei Raumtemperatur gewogen, dieses daran anschließend für 2 Minuten auf 130 °C getrocknet und daran anschließend abgekühlt und wieder bei Raumtemperatur gewogen wird. Dabei entspricht die Restfeuchte der Gewichtsdifferenz des Halbzeugs vor und nach dem Trocknungsvorgang, bezogen auf das Gewicht des Halbzeugs vor dem Trocknungsvorgang multipliziert mit dem Faktor 100.

Das so erhaltene Halbzeug ist nach Erwärmen auf eine Temperatur ≥ 100 °C noch verformbar und kann bei dieser Temperatur in die endgültige Form des gewünschten Formkörpers gebracht werden.

Die nachfolgende Aushärtungsstufe erfolgt vorteilhaft dergestalt, dass das Halbzeug bei einer Temperatur ≥ 130 °C solange erhitzt wird, bis dieses eine Restfeuchte ≤ 3 Gew.-%, bevorzugt ≤ 1 Gew.-% und insbesondere bevorzugt ≤ 0,5 Gew.-% aufweist, wobei das Bindemittel in Folge einer Veresterungsreaktion aushärtet.

Häufig erfolgt die Herstellung der Formkörper dadurch, dass das Halbzeug in einer Formpresse in den vorgenannten Temperaturbereichen in die endgültige Form gebracht und daran anschließend ausgehärtet wird.

Selbstverständlich ist es aber auch möglich, dass die Trocknungsstufe und die Aushärtungsstufe der Formkörper in einem Arbeitsschritt, beispielsweise in einer Formpresse erfolgen.

Die nach dem erfindungsgemäßen Verfahren zugänglichen Formkörper weisen vorteilhafte Eigenschaften, insbesondere eine verbesserte Reißfestigkeit im nassen Zustand sowie eine deutlich geringere Vergilbungsneigung im Vergleich zu den Formkörpern des Standes der Technik auf.

Die Erfindung soll anhand nachfolgender nicht einschränkender Beispiele erläutert werden.

A. Herstellung von Polymerisat A

Polymerisat A

In einen 2 l-Vierhalskolben, ausgerüstet mit einem Anker-Rührer, Rückflusskühler und drei Dosiereinrichtungen, wurden bei 20 bis 25 °C (Raumtemperatur) 200,0 g Methylethylketon (MEK) und 41,0 g Maleinsäureanhydrid (MSA) unter Stickstoffatmosphäre vorgelegt. Daran anschließend wurde die Vorlagenlösung unter Rühren auf 82 °C aufgeheizt und zeitgleich beginnend Zulauf 1 innerhalb von 3 Stunden, Zulauf 2 innerhalb von 5 Stunden und Zulauf 3 innerhalb von 5,5 Stunden kontinuierlich mit gleich bleibenden Mengenströmen zudosiert. Daran anschließend ließ man die Reaktionsmischung noch 2 Stunden bei vorgenannter Temperatur nachpolymerisieren und kühlte dann die erhaltene Polymerlösung auf Raumtemperatur ab.

| Zulauf 1: | |
|---|---|
| 120,0 g | MSA (in geschmolzener Form) |

| Zulauf 2: | |
|---|---|
| 373,4 g | Acrylsäure (AS) |
| 109,4 g | Octen-1 und |
| 217,0 g | MEK |

| Zulauf 3: | |
|---|---|
| 42,9 g | einer 75 gew.-%igen Lösung von tert.-Butylperpivalat in einem aromatenfreien Kohlenwasserstoffgemisch (Fa. Akzo Nobel) und |
| 184,0 g | MEK |

Daran anschließend verdünnte man 1200 g der erhaltenen organischen Polymerisatlösung mit 700 g entionisiertem Wasser und destillierte am Rotationsverdampfer bei einer Badtemperatur von 80 °C solange ein MEK/Wassergemisch ab, bis ein Innendruck von 20 mbar (absolut) erreicht war. Danach stellte man durch Zugabe von entionisiertem Wasser ein Feststoffgehalt von 51,6 Gew.-% ein. Der K-Wert von des Polymerisats A wurde zu 15,0 und das gewichtsmittlere Molekulargewicht zu 11700 g/mol bestimmt.

Der Feststoffgehalt wurde generell bestimmt, indem eine Probe von ca. 1 g in einem Umluft-Trockenschrank für zwei Stunden bei 120 °C getrocknet wurde. Es wurden jeweils zwei separate Messungen durchgeführt. Die in den Beispielen angegebenen Werte stellen Mittelwerte der beiden Messergebnisse dar.

Der K-Wert des Polymerisats A wurde nach Fikentscher (ISO 1628-1) mittels einer 1 gew.-%igen wässrigen Polymerlösung bestimmt.

Die Ermittlung des gewichtsmittleren Molekulargewichts des Polymerisats A erfolgte mittels Gelpermeationschromatographie (Linearsäule: Supremea M der Fa. PSS, E-luens: 0,08 mol/l TRIS-Puffer pH 7,0, entionisiertes Wasser, Flüssigkeitsstrom: 0,8 ml/min, Detektor: Differentialrefraktometer ERC 7510 der Fa. ERC).

Vergleichspolymerisat VA

Die Herstellung von Vergleichspolymerisat VA erfolgte analog der Herstellung von Polymerisat A mit dem Unterschied, dass in Zulauf 2 kein Octen 1 eingesetzt wurde.

Durch Zugabe von entionisiertem Wasser wurde ein Festoffgehalt von 46,0 Gew.-% eingestellt. Der K-Wert des Vergleichspolymerisats VA wurde zu 16,5 und das gewichtsmittlere Molekulargewicht zu 12500 g/mol bestimmt.

B. Herstellung von Polymerisat B

Polymerisatdispersion B

In einen 5-I-Reaktor mit Ankerrührer, Heiz- und Kühleinrichtungen sowie verschiedenen Dosiereinrichtungen wurde bei Raumtemperatur unter Stickstoffatmosphäre die Vorlage eingefüllt, unter Rühren auf 90 °C aufgeheizt und anschließend bei dieser Temperatur gehalten. Danach dosierte man 0,75 g des Zulaufs 2 innerhalb einer Minute in das wässrige Polymerisationsmedium und rührte die erhaltene Mischung für 5 Minuten. Daran anschließend wurden die Gesamtmengen der Zuläufe 1 und 3 sowie die Restmenge von Zulauf 2 zeitgleich beginnend innerhalb von 3 Stunden mit gleich bleibenden Mengenströmen dem wässrigen Reaktionsmedium zudosiert. Im Anschluss daran wurde Zulauf 4 innerhalb von 30 Minuten mit gleich bleibendem Mengenstrom zudosiert und daran anschließend für 30 Minuten bei 90 °C nachpolymerisiert. Danach wurde die Temperatur auf 70 °C erniedrigt und zeitgleich beginnend die Zuläufe 5 und 6 über einen Zeitraum von 60 Minuten mit gleich bleibenden Mengeströmen zudosiert. Daran anschließend wurde die erhaltene wässrige Polymerisatdispersion auf Raumtemperatur abgekühlt und über ein 125 μm Filter filtriert.

| Vorlage: | |
|---|---|
| 332,5 | g entionisiertes Wasser |
| 6,8 g | der 51,6 gew-%igen wässrigen Lösung des Polymerisats A |

| Zulauf 1: | |
|---|---|
| 671,5 g | der 51,6 gew-%igen wässrigen Lösung des Polymerisats A |

| Zulauf 2: | |
|---|---|
| | 14,0 g entionisiertes Wasser |
| 1,0 g | Natriumpersulfat |

| Zulauf 3: | |
|---|---|
| 150,5 g | n-Butylacrylat |
| 164,5 g | Styrol |
| 17,5 g | 2-Hydroxyethylacrylat |
| 17,5 g | Glycidylmethacrylat |

| Zulauf 4: | |
|---|---|
| 9,3 | g entionisiertes Wasser |
| 0,7 g | Natriumpersulfat |

| Zulauf 5: | |
|---|---|
| 10,5 g | einer 10 gew.-%igen wässrigen Lösung von tert.-Butylhydroperoxid |

| Zulauf 6: | |
|---|---|
| 10,3 g | einer 13,3 gew.-%igen wässrigen Lösung eines 1:1-Umsetzungsproduktes aus Aceton und Natriumhydrogensulfit |

Die erhaltene wässrige Polymerisatdispersion B wies einen pH-Wert von 1,5 auf. Der Feststoffgehalt wurde zu 48,6 Gew.-%, die Viskosität zu 2160 mPas, die mittlere Teilchengröße zu 157 nm und der Koagulatgehalt zu 0,001 Gew.-% bestimmt.

Die pH-Werte wurden generell mittels eines handylab 1 pH-Meters der Fa. Schott bei 23 °C bestimmt.

Die Viskositäten der wässrigen Polymerisatdispersionen wurden generell gemäß DIN 53019 mit einem Rheomat der Fa. Physika bei 23 °C und einer Schergeschwindigkeit von 250 $s^{-1}$ bestimmt.

Die Bestimmung der mittleren Teilchengröße erfolgte generell nach der Methode der quasielastischen Lichtstreuung (DIN-ISO 13321) mit einem High Performance Particle Sizer (HPPS) der Fa. Malvern Instrumensts Ltd.

Die Koagulatgehalte wurden generell bestimmt, indem das 125 μm Filter nach der Filtration mit 100 ml entionisiertem Wasser gespült, anschließend 30 Minuten bei 140 °C im Trockenschrank getrocknet und daran anschließend

bei Raumtemperatur gewogen wurde. Der jeweilige Koagulatgehalt entspricht der Gewichtsdifferenz des Filters vor und nach der Filtration, bezogen auf den Feststoffgehalt der jeweiligen Polymerisatdispersion.

Vergleichspolymerisatdispersion VB

Die Herstellung der Vergleichspolymerisatdispersion VB erfolgte völlig identisch zur Herstellung der Polymerisatdispersion B mit dem Unterschied, dass in der Vorlage 7,6 g und als Zulauf 1 753,2 g der 46 gew.-%igen wässrigen Lösung des Vergleichspolymerisats VA anstelle von 6,8 g in der Vorlage und 671,5 g als Zulauf 1 der 51,6 gew.-%igen wässrigen Lösung des Polymerisats A eingesetzt wurden. Darüber hinaus wurde in der Vorlage die Menge an entionisiertem Wasser von 332,5 g auf 250,8 g reduziert.

Die erhaltene wässrige Vergleichspolymerisatdispersion VB wies einen pH-Wert von 1,6 auf. Der Feststoffgehalt wurde zu 48,4 Gew.-%, die Viskosität zu 1960 mPas, die mittlere Teilchengröße zu 309 nm und der Koagulatgehalt zu 0,6 Gew.-% bestimmt.

C. Anwendungstechnische Untersuchungen

Es wurden Glasfaservliese der Größe 32 x 28 cm mit einem Flächengewicht von 50 g/$m^2$ der Fa. Schuller GmbH, Wertheim eingesetzt.

Die vorgenannten wässrigen Polymerisatdispersionenen B und VB wurden bei Raumtemperatur und unter Rühren soviel Triethanolamin zugesetzt, dass die wässrigen Disperisonen pro 100 Gewichtsteilen Polymerisat (entsprechend der Gesamtmenge an Polymerisat A/VA und B) 9 Gewichtsteile Triethanolamin enthielten. Anschließend wurden die so erhaltenen wässrigen Polymerisatdisperionen mit entionisiertem Wasser auf einen Feststoffgehalt (entsprechend der Gesamtmenge an Polymerisat A/VA und B sowie Triethanolamin [fest/fest]) von 25 Gew.-% verdünnt. Danach wurden die Glasfaservliese in Längsrichtung über ein Endlos-PES-Siebband mit einer Bandlaufgeschwindigkeit von 60 cm pro Minute durch die vorgenannten 25 gew.-%igen wässrigen Bindemittelflotten geleitet. Durch anschließende Absaugung der wässrigen Bindemittelflotten wurde der Nassauftrag auf 40 g/$m^2$ (entsprechend 10 g/$m^2$ Bindemittel als Feststoff gerechnet) eingestellt. Die so erhaltenen imprägnierten Glasfaservliese wurden auf einen Kunststoffnetz als Träger entweder für 2 Minuten bei 160 °C oder für 2 Minuten bei 180 °C in einem Mathis-Ofen bei maximalen Heißluftstrom getrocknet/ausgehärtet. Nach dem Abkühlen auf Raumtemperatur wurden Prüfstreifen mit einer Größe von 240 x 50 mm in Faserlängsrichtung geschnitten. Die erhaltenen Prüfstreifen wurden anschließend für 24 Stunden bei 23 °C und 50 % relativer Luftfeuchtigkeit im Klimaraum gelagert. Die in Abhängigkeit von der als wässriges Bindemittel eingesetzten Polymerisatdisperison erhaltenen Glasfaservliesprüfstreifen werden im folgenden Prüfstreifen B und VB bezeichnet.

Bestimmung der Vergilbung

Die Bestimmung der Vergilbung erfolgte mit einem Farbmessgerät der Fa. Lange in Anlehnung an DIN 5033 und DIN 6174. Die Prüfstreifen B und VB wurden gegen eine weiße Prüfkachel geprüft. Zur Prüfung wurden jeweils 6 Prüfstreifen übereinander gelegt. Als Maß für die Vergilbung wurde der b*-Wert bestimmt (das CIELab System beschreibt Farbe exakt im Farbraum, welcher aus drei Koordinatenachsen gebildet wird: L: Helligkeit, a*: rot-grün-Achse, b*: gelb-blau-Achse. Dabei gilt: je größer die b*-Werte sind, desto gelber sind die Prüfstreifen). Es erfolgten jeweils 3 Messungen. Die in Tabelle 1 angegebenen Werte stellen jeweils den Mittelwert dieser Messungen dar.

Bestimmung der Nassreißkraft

Vor der Bestimmung der Nassreißkraft wurden die Prüfstreifen B und VB für 15 Minuten in entionisiertem Wasser bei 80 °C gelagert, danach auf Raumtemperatur abgekühlt und mit einem Baumwollgewebe trocken getupft. Anschließend erfolgte die Messung an einer Zugprüfmaschine der Firma Zwick-Roell, Typ Z005. Die Prüfstreifen B und VB wurden dabei so senkrecht in eine Spannvorrichtung eingebracht, dass die freie Einspannlänge 200 mm betrug. Daran anschließend wurden die eingespannten Prüfstreifen bei Raumtemperatur mit einer Geschwindigkeit von 25 mm pro Minute in entgegengesetzter Richtung bis zum Riss der Prüfstreifen auseinander gezogen. Je höher die zum Riss der Prüfstreifen erforderliche Kraft ist, desto besser ist die entsprechende Reißkraft zu bewerten. Es erfolgten jeweils 5 Messungen. Die ebenfalls in Tabelle 1 angegebenen Werte stellen jeweils den Mittelwert dieser Messungen dar.

Tabelle 1: Zusammenfassung der Ergebnisse

| | Aushärtung bei 160 °C | | Aushärtung bei 180 °C | |
|---|---|---|---|---|
| Prüfstreifen | Vergilbung [b*-Wert] | Nassreißkraft [N/50mm] | Vergilbung [b*-Wert] | Nassreißkraft [N/50mm] |
| B | 1,6 | 96 | 2,5 | 127 |

(fortgesetzt)

| | Aushärtung bei 160 °C | | Aushärtung bei 180 °C | |
|---|---|---|---|---|
| Prüfstreifen | Vergilbung [b*-Wert] | Nassreißkraft [N/50mm] | Vergilbung [b*-Wert] | Nassreißkraft [N/50mm] |
| VB | 2,5 | 86 | 6,2 | 103 |

Aus den Ergebnissen ist klar ersichtlich, dass die unter Verwendung der erfindungsgemäßen wässrigen Bindemittel erhaltenen Prüfstreifen ein deutlich verbessertes Nassreißkraftverhalten sowie eine deutlich geringere Vergilbung aufweisen.

## Patentansprüche

**1.** Wässriges Bindemittel für körnige und/oder faserförmige Substrate, enthaltend als wirksame Bestandteile

a) ein durch radikalische Polymerisation erhältliches Polymerisat, welches

| | |
|---|---|
| 0,1 bis 40 Gew.-% | wenigstens eines $C_3$- bis $C_{30}$-Alkens (Monomer A1), |
| 40 bis 99,9 Gew.-% | wenigstens einer ethylenisch ungesättigten $C_3$- bis $C_6$-Monocarbonsäure (Monomer A2), |
| 0 bis 50 Gew.-% | wenigstens einer ethylenisch ungesättigten $C_4$- bis $C_{12}$-Dicarbonsäure und/ oder der daraus zugänglichen ethylenisch ungesättigten Dicarbonsäuremonoalkylester oder Dicarbonsäureanhydride (Monomer A3), und |
| 0 bis 30 Gew.-% | wenigstens einer anderen ethylenisch ungesättigten Verbindung, welche mit den Monomeren A1 bis A3 copolymerisierbar ist (Monomer A4), |

in einpolymerisierter Form enthält, wobei sich die Monomerenmengen A1 bis A4 zu 100 Gew.-% addieren [Polymerisat A],
b) ein durch radikalische Polymerisation erhältliches Polymerisat, welches 0,1 bis 15 Gew.-% wenigstens einer, wenigstens eine Carboxyl-, Hydroxyalkyl-, Epoxyl-, Methylol-, Silyl- und/oder Oxazolinylgruppe aufweisende, ethylenisch ungesättigten Verbindung [Monomer B1] und 85 Gew.-% bis 99,9 Gew.-% wenigstens einer anderen, mit dem Monomer B1 copolymerisierbaren ethylenisch ungesättigten Verbindung [Monomer B2] in einpolymerisierter Form enthält, wobei sich die Monomerenmengen B1 und B2 zu 100 Gew.-% addieren [Polymerisat B], und
c) eine Polyolverbindung mit wenigstens zwei Hydroxylgruppen [Polyol C].

**2.** Wässriges Bindemittel nach Anspruch 1, wobei das Polymerisat A in einpolymerisierter Form aufgebaut ist aus:

| | |
|---|---|
| 1 bis 25 Gew.-% | wenigstens eines Monomeren A1 |
| 50 bis 89 Gew.-% | wengistens eines Monomeren A2 und |
| 10 bis 40 Gew.-% | wenigstens eines Monomeren A3. |

**3.** Wässriges Bindemittel nach einem der Ansprüche 1 oder 2, wobei das wenigstens eine Monomer A1 Octen-1 und/ oder Decen-1, das wenigstens eine Monomer A2 Acrylsäure und/oder Methacrylsäure und das wenigstens eine Monomer A3 Maleinsäure, Itakonsäure, Methylmaleinsäure, 1,2,3,6-Tetrahydrophthalsäure, Maleinsäureanhydrid, Itakonsäureanhydrid, Methylmaleinsäureanhydrid und/oder 1,2,3,6-Tetrahydrophthalsäureanhydrid ist.

**4.** Wässriges Bindemittel nach einem der Ansprüche 1 bis 3, wobei das Polymerisat B in einpolymerisierter Form aufgebaut ist aus:

| | |
|---|---|
| 4 bis 12 Gew.-% | wenigstens eines Monomeren B1 und |
| 88 bis 96 Gew.-% | wenigstens eines Monomeren B2. |

**5.** Wässriges Bindemittel nach einem der Ansprüche 1 bis 4, wobei das Monomer B1 ausgewählt ist aus der Gruppe umfassend Acrylsäure, Methacrylsäure, Crotonsäure, Fumarsäure, Maleinsäure, Maleinsäureanhydrid, Methylmaleinsäure, Itakonsäure, 2-Hydroxyethylacrylat, 2-Hydroxyethylmethacrylat, 2-Hydroxypropylacrylat, 2-Hydroxypropylmethacrylat, 4-Hydroxybutylacrylat, Diethylenglykolmonoacrylat, 4-Hydroxybutylvinylether, Glycidylacrylat, Glycidylmethacrylat, N-Methylolacrylamid, N-Methylolmethacrylamid, 2-Isopropenyl-2-oxazolin, 5-(2-Oxazolinyl)pentylmethacrylat, (3-Methacryloxypropyl)trimethoxysilan, Vinyltriacetoxysilan und Vinyltriethoxysilan.

**6.** Wässriges Bindemittel nach Anspruch 1 bis 5, wobei das Polymerisat B in einpolymerisierter Form aufgebaut ist aus:

| | |
|---|---|
| 40 bis 56 Gew.-% | Styrol |
| 40 bis 56 Gew.-% | n-Butylacrylat |
| 2 bis 7 Gew.-% | 2-Hydroxyethylacrylat und |
| 2 bis 7 Gew.-% | Glycidylmethacrylat. |

**7.** Wässriges Bindemittel nach einem der Ansprüche 1 bis 6, wobei das Polyol C ein Alkanolamin ist.

**8.** Wässriges Bindemittel nach einem der Ansprüche 1 bis 7, wobei das Polyol C Triethanolamin ist.

**9.** Wässriges Bindemittel nach einem der Ansprüche 1 bis 8, wobei das Gewichtsverhältnis von Polymerisat A zu Polymerisat B (auf Feststoffbasis) 100:1 bis 1:100 und das Gewichtsverhältnis von Polymerisat A zu Polyol C (auf Feststoffbasis) 100:1 bis 1:3 beträgt.

**10.** Verwendung eines wässrigen Bindemittels gemäß einem der Ansprüche 1 bis 9 als Bindemittel bei der Herstellung eines Formkörpers aus einem körnigen und/oder faserförmigen Substrat.

**11.** Verfahren zur Herstellung eines Formkörpers aus körnigen und/oder faserförmigen Substraten, **dadurch gekennzeichnet, dass** ein wässriges Bindemittel gemäß einem der Ansprüche 1 bis 9 auf das körnige und/oder faserförmige Substrat aufgebracht wird, gegebenenfalls das mit dem wässrigen Bindemittel behandelten körnige und/oder faserförmige Substrat in Form gebracht wird und anschließend das behandelte körnige und/oder faserförmige Substrat einem thermischen Behandlungsschritt bei einer Temperatur ≥ 130 °C unterzogen wird.

**12.** Verfahren nach Anspruch 11, **dadurch gekennzeichnet, dass** pro 100 g körniges und/oder faserförmiges Substrat ≥ 1 g und ≤ 100 g Bindemittel (berechnet als Summe der Gesamtmengen von Polymerisat A, Polymerisat B und Polyol C auf Feststoffbasis) eingesetzt werden.

**13.** Verfahren nach Anspruch 11 oder 12, **dadurch gekennzeichnet, dass** das körnige und/oder faserförmige Substrat ein mechanisch verfestigtes oder chemisch vorgebundenes Faservlies ist.

**14.** Formkörper erhältlich nach einem Verfahren gemäß einem der Ansprüche 11 bis 13.

Europäisches Patentamt
European Patent Office
Office européen des brevets

# EUROPÄISCHER RECHERCHENBERICHT

Nummer der Anmeldung
EP 09 17 1788

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,A | DE 10 2005 035692 A1 (BASF AG [DE]) 1. Februar 2007 (2007-02-01) * das ganze Dokument * ----- | 1-14 | INV. C08L33/02 C08L35/00 C08L23/10 C08L23/18 |
| D,A | DE 196 12 986 A1 (BASF AG [DE]) 2. Oktober 1997 (1997-10-02) * das ganze Dokument * ----- | 1-14 | |

RECHERCHIERTE SACHGEBIETE (IPC)
C08L

Der vorliegende Recherchenbericht wurde für alle Patentansprüche erstellt

1

| Recherchenort | Abschlußdatum der Recherche | Prüfer |
|---|---|---|
| München | 11. Januar 2010 | Simmerl, Reinhold |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 09 17 1788

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2010

| Im Recherchenbericht angeführtes Patentdokument | Datum der Veröffentlichung | Mitglied(er) der Patentfamilie | Datum der Veröffentlichung |
|---|---|---|---|
| DE 102005035692 A1 | 01-02-2007 | AT 432295 T | 15-06-2009 |
| | | EP 1910423 A1 | 16-04-2008 |
| | | WO 2007012616 A1 | 01-02-2007 |
| | | ES 2324372 T3 | 05-08-2009 |
| | | US 2008221267 A1 | 11-09-2008 |
| DE 19612986 A1 | 02-10-1997 | AU 736657 B2 | 02-08-2001 |
| | | AU 2292697 A | 22-10-1997 |
| | | BR 9708491 A | 03-08-1999 |
| | | WO 9737046 A1 | 09-10-1997 |
| | | EP 0891430 A1 | 20-01-1999 |
| | | ES 2140227 T3 | 16-02-2000 |
| | | JP 2000507628 T | 20-06-2000 |
| | | KR 20000005161 A | 25-01-2000 |
| | | MX PA98008034 A | 24-08-2004 |
| | | PT 891430 E | 28-04-2000 |
| | | TR 9801967 T2 | 21-12-1998 |
| | | US 6200640 B1 | 13-03-2001 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4076917 A
- EP 445578 A
- EP 583086 A
- EP 651088 A
- EP 672920 A
- DE 2214450 A
- US 5143582 A
- WO 03042254 A
- WO 03091297 A
- EP 1384729 A
- US 4921898 A
- US 5070134 A
- US 5110856 A
- US 5629370 A
- EP 295727 A
- EP 757065 A
- EP 1114833 A
- DE 19620817 A
- DE OS1720277 A
- US 5521266 A
- EP 780401 A
- DE 102005035692 A
- EP 891430 A
- EP 670909 A
- EP 450452 A
- DE 4003422 A
- US 4269749 A
- WO 9745461 A


### In der Beschreibung aufgeführte Nicht-Patentliteratur


- **A. Sen et al.** *Journal American Chemical Society,* 2001, vol. 123, 12738-12739
- **B. Klumperman et al.** *Macromolecules,* 2004, vol. 37, 4406-4416
- **A. Sen et al.** Journal of Polymer Science. *Part A: Polymer Chemistry,* 2004, vol. 42 (24), 6175-6192
- *J. Macromol. Sci. Chem.,* 1983, vol. A19 (1), 107-122
- **Gemäß E. ; Witek, A. ; Kochanowski, E. Bortel.** *Polish Journal of Applied Chemistry,* 2002, vol. XLVI (3-4), 177-185
- **A. Echte.** Handbuch der Technischen Polymerchemie. VCH, 1993
- **B. Vollmert.** *Grundriss der Makromolekularen Chemie,* 1988, vol. 1
- **T.G. Fox.** *Bull. Am. Phys. Soc.,* 1956, vol. 1, 123
- Ull-mann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. Brandrup ; E.H. Immergut.** Polymer Handbook. J. Wiley, 1966
- POLYMER HANDBOOK. J.Wiley, 1975
- POLYMER HANDBOOK. J. Wiley, 1989
- Emulsionspolymerisation in Encyclopedia of Polymer Science and Engineering. 1987, vol. 8, 659 ff
- **D.C. Blackley.** *High Polymer Latices,* 1966, vol. 1, 35 ff
- **H. Warson.** The Applications of Synthetic Resin Emulsions. 1972, 246 ff
- **D. Diederich.** *Chemie in unserer Zeit,* 1990, vol. 24, 135-142
- Emulsion Polymerisation. Interscience Publishers, 1965
- **F. Hölscher.** Dispersionen synthetischer Hochpolymerer. Springer-Verlag, 1969
- Methoden der organischen Chemie. **Houben-Weyl.** Makromolekulare Stoffe. Georg-Thieme-Verlag, 1961, vol. XIV
- Methoden der organischen Chemie. **Houben-Weyl.** Makromolekulare Stoffe. Georg-Thieme-Verlag, 1961, vol. XIV, 192-208